(19) Europäisches Patentamt / European Patent Office / Office européen des brevets

(11) **EP 4 778 987 A1**

(12) **EUROPEAN PATENT APPLICATION**
published in accordance with Art. 153(4) EPC

(43) Date of publication:
22.07.2026 Bulletin 2026/30

(21) Application number: 24865278.6

(22) Date of filing: 30.08.2024

(51) International Patent Classification (IPC):
*C09J 123/26* (2006.01)  *B32B 7/12* (2006.01)
*B32B 27/00* (2006.01)  *C09J 11/06* (2006.01)
*H01M 50/105* (2021.01)  *H01M 50/119* (2021.01)
*H01M 50/121* (2021.01)  *H01M 50/124* (2021.01)
*C09J 151/06* (2006.01)

(52) Cooperative Patent Classification (CPC):
**B32B 7/12; B32B 27/00; C09J 11/06; C09J 123/26; H01M 50/105; H01M 50/119; H01M 50/121; H01M 50/124;** C09J 151/06; Y02E 60/10

(86) International application number:
**PCT/JP2024/031179**

(87) International publication number:
**WO 2025/057776 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 13.09.2023 JP 2023148024

(71) Applicant: **TOYOBO MC Corporation**
**Osaka-shi, Osaka 530-0001 (JP)**

(72) Inventor: **SAKATA, Hideyuki**
**Takasago-shi, Hyogo 676-0082 (JP)**

(74) Representative: **Vossius & Partner**
**Patentanwälte Rechtsanwälte mbB**
**Siebertstraße 3**
**81675 München (DE)**

(54) **POLYOLEFIN ADHESIVE COMPOSITION, LAMINATE, AND PACKAGING MATERIAL FOR LITHIUM ION BATTERY**

(57) The present invention provides an adhesive composition that is excellent in pot life properties, adhesion, heat resistance, chemical resistance to electrolyte solutions, and moldability. Specifically, the present invention provides an adhesive composition containing an acid-modified polyolefin (A), a multifunctional polyisocyanate curing agent (B), and an organoaluminum compound (C), in which the acid-modified polyolefin (A) has a weight average molecular weight (Mw) within the range of 10,000 to 200,000.

EP 4 778 987 A1

## Description

Technical Field

The present invention relates to a polyolefin-based adhesive composition, a laminate, and a packaging material for a lithium-ion battery.

Background Art

In recent years, lithium-ion batteries (hereinafter, also referred to as "LIBs"), which can be made ultra-thin and small, have been actively developed as batteries used in computers, mobile devices such as mobile phones, video cameras, satellites, and the like. As a packaging material for such LIBs, a laminate with a multilayer structure composed of, for example, a substrate layer, barrier layer, and sealant layer has been used; this is because it has the advantage that, unlike conventionally widely known metal cans, it is lightweight, and the shape of the batteries can be freely selected.

As contents of the battery, an LIB includes a positive electrode material and a negative electrode material, as well as an electrolyte solution in which a lithium salt is dissolved in an aprotic solvent (e.g., propylene carbonate, ethylene carbonate, dimethyl carbonate, diethyl carbonate, or ethyl methyl carbonate) or an electrolyte layer of a polymer gel impregnated with the electrolyte solution. It is known that when such a highly penetrating electrolyte solution passes through the sealant layer, the lamination strength between the barrier layer and the sealant layer is reduced, causing delamination, and finally resulting in leakage of the electrolyte solution. Moreover, although $LiPF_6$, $LiBF_4$, and like materials are used as lithium salts (electrolytes of the batteries), hydrolysis reaction of such a salt with moisture produces hydrofluoric acid, which corrodes the barrier layer, reducing the lamination strength. Adhesives for LIBs are thus required to have resistance to an electrolyte solution and electrolyte. Adhesives for LIBs are also required to exhibit adhesion properties in bonding at a temperature of 120°C or lower.

Furthermore, LIBs must have durability, based on the assumption that they will be used in various environments. For example, when LIBs are used in mobile devices, the LIBs are required to have liquid leakage resistance in environments at a temperature of about 80°C. In applications in vehicles, adhesives for LIBs are required to have heat resistance of about 80°C since they are expected to be used in higher-temperature environments than those for general small LIBs.

Under such circumstances, an adhesive for lithium-ion batteries has been proposed to improve heat resistance and chemical resistance to electrolyte solutions, and an adhesive composition containing an acid-modified polyolefin and an isocyanate curing agent is disclosed (for example, Patent Literature (PTL) 1).

Furthermore, a battery packaging material containing an acid-modified polyolefin, a multifunctional isocyanate curing agent, and an organometallic catalyst such as tin, titanium, or zirconium has been proposed to improve chemical resistance to electrolyte solutions over a long period of time (for example, PTL 2).

Citation List

Patent Literature

PTL 1: WO2021/106849
PTL 2: JP2018-049849A

Summary of Invention

Technical Problem

However, in PTL 1, a long curing time of 5 days at 40°C is required to sufficiently promote curing reaction.

In the lithium battery exterior material containing an organometallic catalyst described in PTL 2, organic tin compounds promote curing reaction due to their catalytic function; however, due to significant thickening and gelation caused by stirring for a long period of time, they do not provide satisfactory pot life properties. In addition, the lithium battery exterior material described in PTL 2 is poor in heat resistance and chemical resistance to electrolyte solutions.

Furthermore, in recent years, organic tin compounds have been pointed out for their toxicity; tributyltin (TBT) contained in dibutyltin compounds in particular is also a concern as an endocrine disruptor, and there are limitations on its use. Moreover, regarding organic titanium compounds and organic zirconium compounds, the effect of promoting curing reaction is insufficient when the curing time is short.

The present invention was made in view of the above. An object of the present invention is to provide an adhesive composition that is excellent in pot life properties, adhesion, heat resistance, chemical resistance to electrolyte solutions, and moldability.

Solution to Problem

The present inventor conducted extensive research to achieve the above object, and found that the object can be achieved by containing an acid-modified polyolefin having a weight average molecular weight within a specific range, a multifunctional polyisocyanate curing agent, and an organoaluminum compound. The present invention has been accomplished based on this finding.

The present invention encompasses, for example, the subject matter described in the following item.

Item 1.

An adhesive composition comprising

an acid-modified polyolefin (A),
a multifunctional polyisocyanate curing agent (B), and
an organoaluminum compound (C),
wherein the acid-modified polyolefin (A) has a weight average molecular weight (Mw) within the range of 10,000 to 200,000.

Advantageous Effects of Invention

The adhesive composition of the present invention is excellent in pot life properties, adhesion, heat resistance, chemical resistance to electrolyte solutions, and moldability. Since the adhesive composition of the present invention has these properties, the adhesive composition of the present invention can be suitably used as a packaging material for a lithium-ion battery.

Description of Embodiments

Preferred embodiments of the present invention will be described in detail below. The following description of technical elements may be based on representative embodiments and specific examples; however, the present invention is not limited to such embodiments.

In the present specification, the terms "comprise" and "contain" include the concepts of comprising, containing, consisting essentially of, and consisting of.

In the numerical ranges described in stages in the present specification, the upper or lower limit value of a numerical range of a certain stage can be freely combined with the upper or lower limit value of a numerical range of another stage. In any numerical range described in the present specification, the upper or lower limit value of the numerical range may be replaced with a value shown in the Examples or a value that can be unambiguously derived from the Examples. Furthermore, in the present specification, a numerical value connected with "to" means a numerical range including the numerical values before and after "to" as the lower and upper limit values.

In the present specification, "A and/or B" means "one of A or B" or "both A and B," and specifically means "A," "B," or "A and B."

In the present specification, "n-" means "normal," "iso-" means "iso," "sec-" means "secondary," and "tert-" or "t-" means "tertiary."

In the present specification, room temperature refers to a temperature within the range of 20 to 25°C.

1. Adhesive Composition

The adhesive composition of the present embodiment has the following features (I) and (II):

(I) the adhesive composition comprises an acid-modified polyolefin (A), a multifunctional polyisocyanate curing agent (B), and an organoaluminum compound (C); and
(II) the acid-modified polyolefin (A) has a weight average molecular weight (Mw) within the range of 10,000 to 200,000.

Since the adhesive composition of the present embodiment has the features (I) and (II) above, the adhesive composition of the present embodiment is excellent in pot life properties, adhesion, heat resistance, chemical resistance to electrolyte solutions, and moldability.

Acid-modified Polyolefin (A)

The present invention contains an acid-modified polyolefin (A) as an essential component. In one embodiment, the acid-modified polyolefin (A) is preferably a polymer obtained by grafting at least one selected from the group consisting of an $\alpha,\beta$-unsaturated carboxylic acid and an acid anhydride thereof to a polyolefin. In other words, in one embodiment, the acid-modified polyolefin (A) is preferably a graft polymer having a structure in which at least one selected from the group consisting of an $\alpha,\beta$-unsaturated carboxylic acid and an acid anhydride thereof is grafted to a polyolefin.

Examples of polyolefins include homopolyethylene (ethylene homopolymer), homopolypropylene (propylene homopolymer), propylene-$\alpha$-olefin copolymers, and the like. These polyolefins can be used alone or in a combination of two or more. In one embodiment, preferred among these polyolefins are homopolypropylene and/or propylene-$\alpha$-olefin copolymers.

In one embodiment, the acid-modified polyolefin (A) is more preferably a graft polymer having a structure with an $\alpha,\beta$-unsaturated carboxylic or an acid anhydride thereof grafted to homopolypropylene or a propylene-$\alpha$-olefin copolymer.

The propylene-$\alpha$-olefin copolymer is obtained by copolymerizing propylene (main component) with an $\alpha$-olefin. Examples of $\alpha$-olefins include ethylene, 1-butene, 1-heptene, 1-octene, 4-methyl-1-pentene, vinyl acetate, and the like. These $\alpha$-olefins can be used alone or in a combination of two or more. In one embodiment, the $\alpha$-olefin in the propylene-$\alpha$-olefin copolymer is preferably ethylene and/or 1-butene, and more preferably 1-butene.

In one embodiment, the content of the propylene component in the propylene-$\alpha$-olefin copolymer is preferably 50 mol% or more, more preferably 60 mol% or more, and still more preferably 70 mol% or more. When the content of the propylene component in the propylene-$\alpha$-olefin copolymer is 50 mol% or more, the adhesion strength of the adhesive composition to polyolefin substrates (in particular, polypropylene substrates) are further improved.

Examples of the $\alpha,\beta$-unsaturated carboxylic acid and/or the acid anhydride thereof to be graft-polymerized onto a polyolefin include maleic acid, maleic anhydride, fumaric acid, itaconic acid, itaconic anhydride, mesaconic acid, citraconic acid, citraconic anhydride, aconitic acid, aconitic anhydride, and the like. Preferred among these are an acid anhydride of an $\alpha,\beta$-unsaturated carboxylic acid; and more preferred is maleic anhydride.

Specific examples of the acid-modified polyolefin (A) include maleic anhydride-modified homopolypropylene, maleic anhydride-modified propylene-ethylene copolymers, maleic anhydride-modified propylene-1-butene copolymers, maleic anhydride-modified propylene-ethylene-1-butene copolymers, and the like. These acid-modified polyolefins can be used alone or in a combination of two or more. In one embodiment, the acid-modified polyolefin (A) is preferably maleic anhydride-modified homopolypropylene and/or a maleic anhydride-modified propylene-1-butene copolymer, and more preferably maleic anhydride-modified homopolypropylene or a maleic anhydride-modified propylene-1-butene copolymer.

Known methods can be widely used to graft-polymerize an $\alpha,\beta$-unsaturated carboxylic acid or and an anhydride thereof onto a polyolefin. Examples of such methods include a method of heating and melting a polyolefin at a temperature equal to or higher than its melting point in the presence of a radical generator to allow reaction with an $\alpha,\beta$-unsaturated carboxylic acid or an anhydride thereof (melting method), a method of heating and stirring a polyolefin that has been dissolved in an organic solvent in the presence of a radical generator to allow reaction with an $\alpha,\beta$-unsaturated carboxylic acid or an anhydride thereof (solution method), and the like.

It is preferable to use an organic peroxide as the radical generator. Examples of organic peroxides include peroxides, such as di-tert-butyl peroxyphthalate, tert-butyl hydroperoxide, dicumyl peroxide, benzoyl peroxide, tert-butyl peroxybenzoate, tert-butyl peroxy-2-ethylhexanoate, tert-butyl peroxypivalate, methyl ethyl ketone peroxide, di-tert-butyl peroxide, and lauroyl peroxide; azonitriles, such as azobisisobutyronitrile and azobisisopropionitrile; and the like.

It is preferred that the acid-modified polyolefin (A) is not chlorinated. Specifically, the chlorine content is preferably 3 mass% or less, more preferably 2 mass% or less, even more preferably 1 mass% or less, and most preferably 0 mass%. A chlorine content of 3 mass% or less can reduce the environmental burden. In addition, even when used in packaging materials for lithium-ion batteries, no chlorine or hydrogen chloride is emitted, and battery corrosion can be suppressed.

In one embodiment, the acid-modified chlorinated polyolefin content of the adhesive composition is preferably 3 mass% or less, more preferably 2 mass% or less, even more preferably 1 mass% or less, still more preferably 0.5 mass% or less, particularly preferably 0.1 mass% or less, and most preferably 0 mass%.

In one embodiment, the acid value of the acid-modified polyolefin (A) is preferably 2 to 50 mgKOH/g, more preferably 3 to 45 mgKOH/g, even more preferably 5 to 40 mgKOH/g, and particularly preferably 7 to 35 mgKOH/g. When the acid value of the acid-modified polyolefin (A) is 2 to 50 mgKOH/g, the compatibility between the acid-modified polyolefin (A) and the multifunctional polyisocyanate curing agent (B) tends to be better, resulting in good crosslinking density. As a result, the adhesion, heat resistance, and chemical resistance to electrolyte solutions tend to be more excellent.

The acid value of the acid-modified polyolefin (A) can be adjusted by the amounts of $\alpha,\beta$-unsaturated carboxylic

acid, acid anhydride of α,β-unsaturated carboxylic acid, and radical generator used.

In one embodiment, the proportion of acetone-extracted components in the acid-modified polyolefin (A) is preferably 0.01 mass% to 2 mass%, more preferably 0.03 mass% to 1.7 mass%, even more preferably 0.05 mass% to 1.4 mass%, still more preferably 0.07 mass% to 1.2 mass%, and particularly preferably 0.1 mass% to 1.0 mass%. When the proportion of acetone-extracted components in the acid-modified polyolefin (A) is 0.01 to 2 mass%, the production efficiency of the adhesive composition tends to be further improved, and the adhesive composition tends to exhibit better cohesive force and to be more excellent in adhesion, chemical resistance to electrolyte solutions, and moldability. The proportion of acetone-extracted components in the acid-modified polyolefin (A) is a value measured after refluxing with acetone for 2 hours using a Soxhlet extractor. The specific measurement method is explained in the Examples described below.

The proportion of acetone-extracted components of the acid-modified polyolefin (A) can be adjusted by performing reprecipitation with methyl ethyl ketone to purify unreacted monomers, low-molecular-weight components, etc. Examples of low-molecular-weight components include low-molecular-weight polyolefins having a weight average molecular weight (Mw) of 100 to 10000, and the like.

In one embodiment, the storage modulus (E') at 25°C of the acid-modified polyolefin (A) is preferably 10 to 2500 MPa, more preferably 15 to 2000 MPa, even more preferably 20 to 1500 MPa, particularly preferably 25 to 1100 MPa, and most preferably 30 to 800 MPa, from the viewpoint of further improving adhesion and chemical resistance to electrolyte solutions. When the storage modulus (E') at 25°C of the acid-modified polyolefin (A) is 10 to 2500 MPa, the adhesion and followability to a substrate of the adhesive composition are further improved, and the moldability of the laminate is further improved. The storage modulus (E') at 25°C of the acid-modified polyolefin (A) can be measured in accordance with the test method of JISK7244-4 (1999). The specific measurement method is explained in the Examples described below.

In one embodiment, the tensile elongation at break (Eb) at 25°C of the acid-modified polyolefin (A) is preferably 50% to 1000%, more preferably 80% to 900%, even more preferably 120% to 800%, particularly preferably 160% to 700%, and most preferably 200% to 600%. When the tensile elongation at break (Eb) at 25°C of the acid-modified polyolefin (A) is 50% to 1000%, the adhesion and followability to a substrate of the adhesive composition are further improved, and the moldability of the laminate is further improved. The tensile elongation at break (Eb) at 25°C of the acid-modified polyolefin (A) can be measured in accordance with the test method of JISK7161 (2014). The specific measurement method is explained in the Examples described below.

The weight average molecular weight (Mw) of the acid-modified polyolefin (A) is within the range of 10,000 to 200,000. The Mw of the acid-modified polyolefin (A) is preferably within the range of 20,000 to 180,000, more preferably within the range of 30,000 to 160,000, particularly preferably within the range of 40,000 to 140,000, and most preferably within the range of 50,000 to 110,000. If the Mw of the acid-modified polyolefin (A) is less than 10,000, the cohesive force of the acid-modified polyolefin (A) becomes weak, resulting in poor adhesion of the adhesive composition. If the Mw of the acid-modified polyolefin (A) exceeds 200,000, the fluidity of the acid-modified polyolefin (A) decreases, which reduces the pot life properties of the adhesive composition and thus causes problems in operability during bonding. Since the Mw of the acid-modified polyolefin (A) is within the range of 10,000 to 200,000, the acid-modified polyolefin (A) has good cohesive force and good fluidity, and thus, the adhesive composition has good pot life properties, good heat resistance, and good chemical resistance to electrolyte solutions. The weight average molecular weight (Mw) of the acid-modified polyolefin (A) can be measured by gel permeation chromatography (GPC). The specific measurement method is explained in the Examples described below.

In one embodiment, the acid-modified polyolefin (A) is preferably crystalline. In the present specification, crystalline polyolefins refer to those that show a clear melting peak during heating from -100°C to 250°C at an increase rate of 20°C/minute with a differential scanning calorimeter (DSC). When the acid-modified polyolefin (A) is crystalline, the cohesive force of the acid-modified polyolefin (A) is further improved, and thus, the adhesion, heat resistance, and chemical resistance to electrolyte solutions of the adhesive composition are further improved.

In one embodiment, the melting point (Tm) of the acid-modified polyolefin (A) is preferably within the range of 50°C to 120°C, more preferably within the range of 60°C to 100°C, and most preferably within the range of 70°C to 90°C. The melting point (Tm) of the acid-modified polyolefin (A) can be measured using a differential scanning calorimeter (DSC). When the melting point (Tm) of the acid-modified polyolefin (A) is within the range of 50°C to 120°C, the cohesive force of the acid-modified polyolefin (A) is further improved, and thus, the pot life properties, adhesion, heat resistance, and chemical resistance to electrolyte solutions of the adhesive composition are further improved.

In one embodiment, the heat of fusion (ΔH) of the acid-modified polyolefin (A) is preferably within the range of 1 J/g to 60 J/g, more preferably within the range of 3 J/g to 50 J/g, and most preferably within the range of 5 J/g to 40 J/g. When the heat of fusion (ΔH) of the acid-modified polyolefin (A) is within the range of 1 J/g to 60 J/g, the cohesive force derived from the crystals of the acid-modified polyolefin (A) is further improved, and thus, the pot life properties, adhesion, heat resistance, and chemical resistance to electrolyte solutions of the adhesive composition are further improved.

Multifunctional Polyisocyanate Curing Agent (B)

The present invention contains a multifunctional polyisocyanate curing agent (B) as an essential component. The multifunctional polyisocyanate curing agent (B) is a polyisocyanate compound that typically has two or more isocyanate groups per molecule.

In one embodiment, preferred as the multifunctional polyisocyanate curing agent (B) are a diisocyanate compound and a derivative thereof, and more preferred is a derivative of a diisocyanate compound, from the viewpoint of further improving the heat resistance and chemical resistance to electrolyte solutions of the adhesive composition.

Examples of diisocyanate compounds include 2,4-tolylenediisocyanate, 2,6-tolylenediisocyanate, xylylene diisocyanate, diphenylmethane diisocyanate, isophorone diisocyanate, 1,5-naphthalene diisocyanate, hexamethylene diisocyanate, bis(4-isocyanatocyclohexyl)methane, hydrogenated diphenylmethane diisocyanate, and the like. These diisocyanate compounds can be used alone or in a combination of two or more. Among the above diisocyanate compounds, hexamethylene diisocyanate is particularly preferable.

Examples of derivatives of diisocyanate compounds include isocyanurate-modified products of diisocyanate compounds, adduct-modified products of diisocyanate compounds, biuret-modified products of diisocyanate compounds, uretdione-modified products of diisocyanate compounds, allophanate-modified products of diisocyanate compounds, prepolymers having isocyanate residues (low polymers (molecular weight: 300 g/mol to 4,000 g/mol) obtained from a diisocyanate compound and a polyol compound), and the like. These derivatives of diisocyanate compounds can be used alone or in a combination of two or more.

In one embodiment, the derivative of a diisocyanate compound is preferably at least one compound selected from the group consisting of isocyanurate-modified products of hexamethylene diisocyanate, adduct-modified products of hexamethylene diisocyanate, biuret-modified products of hexamethylene diisocyanate, uretdione-modified products of hexamethylene diisocyanate, and allophanate-modified products of hexamethylene diisocyanate, from the viewpoint of further improving the heat resistance and chemical resistance to electrolyte solutions of the adhesive composition.

In one embodiment, the multifunctional polyisocyanate curing agent (B) is preferably an isocyanurate-modified product of a diisocyanate compound and/or a biuret-modified product of a diisocyanate compound, more preferably at least one compound selected from the group consisting of isocyanurate-modified products of hexamethylene diisocyanate, adduct-modified products of hexamethylene diisocyanate, biuret-modified products of hexamethylene diisocyanate, uretdione-modified products of hexamethylene diisocyanate, and allophanate-modified products of hexamethylene diisocyanate, and particularly preferably an isocyanurate-modified product of hexamethylene diisocyanate and/or a biuret-modified product of hexamethylene diisocyanate, from the viewpoint of even further improving the heat resistance and chemical resistance to electrolyte solutions of the adhesive composition.

Furthermore, a compound obtained by reacting one or more isocyanate groups of an isocyanate compound described above with a compound reactive with isocyanate groups may be used as the multifunctional polyisocyanate curing agent. Examples of compounds reactive with isocyanate groups include amino group-containing compounds, such as butylamine, hexylamine, octylamine, 2-ethylhexylamine, dibutylamine, ethylenediamine, benzylamine, and aniline; hydroxyl group-containing compounds, such as methanol, ethanol, propanol, isopropanol, butanol, hexanol, octanol, 2-ethylhexyl alcohol, dodecyl alcohol, ethylene glycol, propylene glycol, benzyl alcohol, and phenol; epoxy group-containing compounds, such as allyl glycidyl ether, 2-ethylhexyl glycidyl ether, phenyl glycidyl ether, neopentyl glycol diglycidyl ether, 1,6-hexanediol diglycidyl ether, and cyclohexanedimethanol diglycidyl ether; compounds containing carboxylic acids, such as acetic acid, butanoic acid, hexanoic acid, octanoic acid, succinic acid, adipic acid, sebacic acid, and phthalic acid; and the like.

In one embodiment, the content of the multifunctional polyisocyanate curing agent (B) is preferably 0.5 to 70 parts by mass, more preferably 1 to 65 parts by mass, even more preferably 2 to 60 parts by mass, still more preferably 3 to 55 parts by mass, still even more preferably 6 to 50 parts by mass, particularly preferably 10 to 45 parts by mass, and most preferably 15 to 40 parts by mass, per 100 parts by mass of the acid-modified polyolefin (A). When the content of the multifunctional polyisocyanate curing agent (B) is 0.5 to 70 parts by mass per 100 parts by mass of the acid-modified polyolefin (A), the adhesive composition cures better, the adhesive composition department has better followability to a substrate, and the adhesive composition is more excellent in adhesion, heat resistance, chemical resistance to electrolyte solutions, and moldability.

Organoaluminum Compound

The present invention contains an organoaluminum compound (C) as an essential component. The presence of the organoaluminum compound (C) promotes the curing reaction of the adhesive composition in a short curing period, allowing the adhesive composition to be cured satisfactorily by the aging step after bonding. The presence of the organoaluminum compound (C) also improves the pot life properties, heat resistance, and chemical resistance to electrolyte solutions of the adhesive composition.

In one embodiment, the organoaluminum compound (C) is preferably an aluminum alcoholate compound and/or an aluminum chelate compound, and more preferably an aluminum chelate compound.

Examples of aluminum alcoholate compounds include aluminum ethylate, aluminum isopropylate, aluminum diisopropylate mono-sec-butyrate, aluminum sec-butylate, and the like. These can be used alone or in a combination of two or more.

Aluminum chelate compounds are typically compounds in which one or more multidentate ligands L are bonded to a central aluminum atom. Aluminum chelate compounds may or may not have one or more monodentate ligands X bonded to the aluminum atom.

For example, when the formula of an aluminum chelate compound having one aluminum atom is represented by Al(L)m(X)n, m is an integer of 1 or more, and n is an integer of 0 or more. When m is 2 or more, the m L's may be the same ligand or different ligands. When n is 2 or more, the n X's may be the same ligand or different ligands.

Examples of multidentate ligands L include β-ketoesters, such as methyl acetoacetate, ethyl acetoacetate, octyl acetoacetate, oleyl acetoacetate, lauryl acetoacetate, and stearyl acetoacetate; keto-enol tautomer-forming compounds, such as acetylacetone (2,4-pentanedione), 2,4-hexanedione, and benzoylacetone, and the like. Keto-enol tautomer-forming compounds refer to compounds capable of forming keto-enol tautomers. In multidentate ligands L, these keto-enol tautomer-forming compounds may be enolates (e.g., acetylacetonate) formed by deprotonation of an enol.

Examples of monodentate ligands X include halogen atoms, such as chlorine and bromine atoms, acyloxy groups, such as pentanoyl, hexanoyl, 2-ethylhexanoyl, octanoyl, nonanoyl, decanoyl, dodecanoyl, and octadecanoyl groups, alkoxy groups, such as methoxy, ethoxy, n-propoxy, isopropoxy, and butoxy groups, and the like.

In one embodiment, the organoaluminum compound (C) is preferably an aluminum chelate compound in which a keto-enol tautomer is coordinated, from the viewpoint of further promoting the curing reaction of the adhesive composition and further improving the pot life properties, heat resistance, and chemical resistance to electrolyte solutions of the adhesive composition.

Examples of aluminum chelate compounds include aluminum acetoacetate diisopropylate, aluminum ethyl acetoacetate diisopropylate, aluminum tris(ethyl acetoacetate), aluminum alkyl acetate diisopropylate, aluminum bis(ethyl acetoacetate) monoacetylacetonate, aluminum tris(acetylacetonate), and the like. These can be used alone or in a combination of two or more.

In one embodiment, the content of the organoaluminum compound (C) is preferably 0.01 to 2 parts by mass, more preferably 0.05 to 1.5 parts by mass, even more preferably 0.1 to 1.25 parts by mass, still more preferably 0.2 to 1.0 parts by mass, and particularly preferably 0.3 to 0.95 parts by mass, per 100 parts by mass of the acid-modified polyolefin (A). When the content of the organoaluminum compound (C) is 0.01 to 2 parts by mass per 100 parts by mass of the acid-modified polyolefin (A), the curing reaction of the adhesive composition is further promoted, and the pot life properties, heat resistance, and chemical resistance to electrolyte solutions of the adhesive composition are further improved.

In one embodiment, the content of the organoaluminum compound (C) is preferably 0.05 to 30 parts by mass, more preferably 0.25 to 20 parts by mass, even more preferably 0.5 to 16 parts by mass, still more preferably 0.9 to 12 parts by mass, still even more preferably 1.0 to 10 parts by mass, particularly preferably 1.1 to 8 parts by mass, and most preferably 1.2 to 6 parts by mass, per 100 parts by mass of the multifunctional polyisocyanate curing agent (B).

Organic Solvent (D)

The adhesive composition of the present embodiment may further contain an organic solvent (D). Examples of the organic solvent (D) include aromatic hydrocarbon-based solvents, such as benzene, toluene, and xylene; aliphatic hydrocarbon-based solvents, such as hexane, heptane, octane, and decane; alicyclic hydrocarbon-based solvents, such as cyclohexane, cyclohexene, methylcyclohexane, and ethylcyclohexane; halogenated hydrocarbon-based solvents, such as trichloroethylene, dichloroethylene, chlorobenzene, and chloroform; alcohol-based solvents, such as methanol, ethanol, isopropyl alcohol, butanol, pentanol, hexanol, propanediol, and phenol; ketone-based solvents, such as acetone, methyl isobutyl ketone, methyl ethyl ketone, pentanone, hexanone, cyclohexanone, isophorone, and acetophenone; cellosolve-based solvents, such as methyl cellosolve and ethyl cellosolve; ester-based solvents, such as methyl acetate, ethyl acetate, butyl acetate, methyl propionate, and butyl formate; glycol ether-based solvents, such as ethylene glycol mono-n-butyl ether, ethylene glycol mono-iso-butyl ether, ethylene glycol mono-tert-butyl ether, diethylene glycol mono-n-butyl ether, diethylene glycol mono-iso-butyl ether, triethylene glycol mono-n-butyl ether, and tetraethylene glycol mono-n-butyl ether, and the like. These can be used alone or in a combination of two or more.

In one embodiment, the content of the organic solvent (D) is preferably 80 to 2000 parts by mass, more preferably 100 to 1600 parts by mass, even more preferably 150 to 1200 parts by mass, still more preferably 200 to 1000 parts by mass, still even more preferably 300 to 950 parts by mass, particularly preferably 400 to 900 parts by mass, and most preferably 425 to 800 parts by mass, per 100 parts by mass of the acid-modified polyolefin (A). When the content of the organic solvent (D) is 80 to 2000 parts by mass per 100 parts by mass of the acid-modified polyolefin (A), the solution state of the main agent and the pot life properties of the adhesive composition are further improved.

In one embodiment, from the viewpoint of further improving the solution state of the main agent and the pot life properties of the adhesive composition, it is preferred that the organic solvent (D) consists of a solvent (D1) and a solvent (D2), that the solvent (D1) is at least one solvent (D1) selected from the group consisting of aromatic hydrocarbon-based solvents, aliphatic hydrocarbon-based solvents, alicyclic hydrocarbon-based solvents, and halogenated hydrocarbon-based solvents, and that the solvent (D2) is at least one solvent selected from the group consisting of alcohol-based solvents, ketone-based solvents, ester-based solvents, and glycol ether-based solvents.

In one embodiment, from the viewpoint of further improving the solution state of the main agent and the pot life properties of the adhesive composition, it is more preferred that the organic solvent (D) consists of a solvent (D1) and a solvent (D2), that the solvent (D1) is an aromatic hydrocarbon-based solvent or an alicyclic hydrocarbon-based solvent, and that the solvent (D2) is a ketone-based solvent.

In one embodiment, from the viewpoint of further improving the solution state of the main agent and the pot life properties of the adhesive composition, it is particularly preferred that the organic solvent (D) consists of a solvent (D1) and a solvent (D2), that the solvent (D1) is an alicyclic hydrocarbon-based solvent, and that the solvent (D2) is a ketone-based solvent.

In one embodiment, from the viewpoint of further improving the solution state of the main agent and the pot life properties of the adhesive composition, the mass ratio of the solvent (D1) to solvent (D2) (solvent (D1)/solvent (D2)) is preferably solvent (D1)/solvent (D2) = 50/50 to 97/3, more preferably solvent (D1)/solvent (D2) = 55/45 to 95/5, even more preferably solvent (D1)/solvent (D2) = 60/40 to 90/10, and particularly preferably solvent (D1)/solvent (D2) = 70/30 to 80/20.

Acid Anhydride Group-containing Monomer (E)

The adhesive composition of the present embodiment may further comprise an acid anhydride group-containing monomer (E). The presence of the acid anhydride group-containing monomer (E) furthermore improves heat resistance.

In one embodiment, the molecular weight of the acid anhydride group-containing monomer (E) is preferably 100 g/mol or more and 500 g/mol or less. The molecular weight of the acid anhydride group-containing monomer (E) is more preferably 150 g/mol or more, and even more preferably 200 g/mol or more. Also, the molecular weight of the acid anhydride group-containing monomer (E) is more preferably 450 g/mol or less, and even more preferably 400 g/mol or less. When the molecular weight of the acid anhydride group-containing monomer (E) is 500 g/mol or less, better compatibility between the acid-modified polyolefin (A) and the multifunctional polyisocyanate curing agent (B) is obtained, and the adhesion of the adhesive composition is further improved. Further, when the acid anhydride group-containing monomer (E) is 100 g/mol or more, bleed-out of the acid anhydride group-containing monomer (E) does not occur, and even better adhesion and heat resistance of the adhesive composition tend to be obtained.

In one embodiment, the acid value of the acid anhydride group-containing monomer (E) is preferably 150 mgKOH/g or more and 800 mgKOH/g or less. The acid value of the acid anhydride group-containing monomer (E) is more preferably 250 mgKOH/g or more, and even more preferably 300 mgKOH/g or more. Also, the acid value of the acid anhydride group-containing monomer (E) is more preferably 600 mgKOH/g or less, and even more preferably 500 mgKOH/g or less. When the acid value of the acid anhydride group-containing monomer (E) is 800 mgKOH/g or less, bleed-out of the acid anhydride group-containing monomer (E) does not occur before the adhesive composition is cured, and even better adhesion and heat resistance of the adhesive composition tend to be obtained. Further, when the acid value of the acid anhydride group-containing monomer (E) is 150 mgKOH/g or more, even better chemical resistance to electrolyte solutions of the adhesive composition is obtained.

The acid anhydride group-containing monomer (E) typically has one or more acid anhydride groups per molecule, and preferably has one acid anhydride group per molecule. In one embodiment, the acid anhydride group contained in the acid anhydride group-containing monomer (E) is preferably an acid anhydride group having a cyclic structure, more preferably a group derived from succinic anhydride, a group derived from maleic anhydride, or a group derived from glutaric anhydride, and even more preferably a group derived from succinic anhydride. In the present specification, a group derived from an acid anhydride typically means a monovalent group having a structure in which one hydrogen atom (a hydrogen atom of a hydrocarbon group) is removed from the acid anhydride. For example, a group derived from succinic anhydride means a monovalent group having a structure in which one hydrogen atom is removed from succinic anhydride.

Examples of the acid anhydride group-containing monomer (E) include acid anhydride group-containing compounds having an alkyl chain and an acid anhydride group, such as succinic anhydride, maleic anhydride, glutaric anhydride, butylsuccinic anhydride, hexylsuccinic anhydride, octylsuccinic anhydride, dodecylsuccinic anhydride, dodecenylsuccinic anhydride, tetrapropenylsuccinic anhydride, butylmaleic anhydride, pentylmaleic anhydride, hexylmaleic anhydride, octylmaleic anhydride, decylmaleic anhydride, dodecylmaleic anhydride, butylglutamic anhydride, hexylglutamic anhydride, heptylglutamic anhydride, octylglutamic anhydride, decylglutamic anhydride, and dodecylglutamic anhydride; and acid anhydride group-containing monomers having an alicyclic structure or an aromatic ring structure and an acid anhydride group, such as pyromellitic dianhydride, trimellitic anhydride, benzophenonetetracarboxylic dianhydride, tetrahydrophthalic anhydride, methyltetrahydrophthalic anhydride, methylpentahydrophthalic anhydride, methyltrihydrophthalic anhydride, trialkyltetrahydrophthalic anhydride, methylcyclohexenedicarboxylic anhydride, chlorendic anhydride, and tetrabromophthalic anhydride. These can be used alone or in a combination of two or more. Among these, dodecenylsuccinic anhydride is particularly preferred from the viewpoint of ease of handling. Dodecenylsuccinic anhydride is typically liquid at room temperature.

In one embodiment, it is preferable that the acid anhydride group-containing monomer (E) has a hydrocarbon group, and it is more preferable that the hydrocarbon group and the acid anhydride group are bonded. It is also more preferable that the hydrocarbon group is linear. When the acid anhydride group-containing monomer (E) contains a hydrocarbon group, further improved compatibility between the acid-modified polyolefin (A) and the multifunctional polyisocyanate curing agent (B) is obtained, and the adhesive composition is likely to exhibit particularly good pot life properties, adhesion, heat resistance, and chemical resistance to electrolyte solutions.

When the acid anhydride group-containing monomer (E) has a hydrocarbon group, the number of carbon atoms in the hydrocarbon group is preferably 3 or more and 20 or less (3, 4, 5, 6, 7, 8, 9, 10, 11, 12, 13, 14, 15, 16, 17, 18, 19, or 20), more preferably 5 or more and 18 or less (5, 6, 7, 8, 9, 10, 11, 12, 13, 14, 15, 16, 17, or 18), even more preferably 8 or more and 16 or less (8, 9, 10, 11, 12, 13, 14, 15, or 16), and particularly preferably 11 or more and 15 or less (11, 12, 13, 14, or 15). When the number of carbon atoms in the hydrocarbon group is 3 or more and 20 or less, further improved compatibility between the acid-modified polyolefin (A) and the multifunctional polyisocyanate curing agent (B) is obtained, and the adhesive composition exhibits even better pot life properties, adhesion, and chemical resistance to electrolyte solutions.

In one embodiment, the acid anhydride group-containing monomer (E) preferably contains a linear alkyl group having 3 or more and 20 or less (3, 4, 5, 6, 7, 8, 9, 10, 11, 12, 13, 14, 15, 16, 17, 18, 19, or 20) carbon atoms, more preferably a linear alkyl group having 5 or more and 18 or less (5, 6, 7, 8, 9, 10, 11, 12, 13, 14, 15, 16, 17, or 18) carbon atoms, even more preferably a linear alkyl group having 8 or more and 16 or less (8, 9, 10, 11, 12, 13, 14, 15, or 16) carbon atoms, and particularly preferably a linear alkyl group having 11 or more and 15 or less (11, 12, 13, 14, or 15) carbon atoms.

In one embodiment, the content of the acid anhydride group-containing monomer (E) is preferably 0.1 parts by mass or more per 100 parts by mass of the acid-modified polyolefin (A). When the content of the acid anhydride group-containing monomer (E) is 0.1 parts by mass or more per 100 parts by mass of the acid-modified polyolefin (A), the adhesive composition exhibits even better heat resistance and chemical resistance to electrolyte solutions, due to the synergistic effect of the multifunctional polyisocyanate curing agent (B) and the acid anhydride group-containing monomer (E). The content of the acid anhydride group-containing monomer (E) is more preferably 0.3 parts by mass or more, even more preferably 0.5 parts by mass or more, and particularly preferably 1 part by mass or more, per 100 parts by mass of the acid-modified polyolefin (A).

In one embodiment, the content of the acid anhydride group-containing monomer (E) is preferably 20 parts by mass or less per 100 parts by mass of the acid-modified polyolefin (A). When the content of the acid anhydride group-containing monomer (E) is 20 parts by mass or less per 100 parts by mass of the acid-modified polyolefin (A), the adhesive composition exhibits heat resistance, adhesion, and chemical resistance to electrolyte solutions, and tends to exhibit, in particular, excellent chemical resistance to electrolyte solutions over a long period of time. The content is more preferably 10 parts by mass or less, even more preferably 8 parts by mass or less, and particularly preferably 5 parts by mass or less.

In one embodiment, from the viewpoint of further improving the adhesion, heat resistance, and chemical resistance to electrolyte solutions of the adhesive composition, the content of the acid anhydride group-containing monomer (E) is preferably 0.1 parts by mass or more and 20 parts by mass or less, more preferably 0.3 parts by mass or more and 10 parts by mass or less, even more preferably 0.5 parts by mass or more and 8 parts by mass or less, or 1 part by mass or more and 5 parts by mass or less, per 100 parts by mass of the acid-modified polyolefin (A).

The adhesive composition of the present embodiment comprises the acid-modified polyolefin (A), the multifunctional polyisocyanate curing agent (B), and the organoaluminum compound (C) as essential components. When the adhesive composition of the present embodiment comprises the organic solvent (D), the acid-modified polyolefin (A) and the multifunctional polyisocyanate curing agent (B) may be dissolved or dispersed in the organic solvent (D), and are preferably dissolved in the organic solvent (D) from the viewpoint of further improving pot life properties.

The adhesive composition of the present embodiment may comprise various tackifiers, thermoplastic elastomers, and plasticizers in addition to the acid-modified polyolefin (A), the multifunctional polyisocyanate curing agent (B), and the organoaluminum compound (C), within a range that does not impair the performance of the present invention. These can be used alone or in a combination of two or more.

Examples of tackifiers include, but are not particularly limited to, polyterpene resins, rosin resins, aliphatic petroleum resins, alicyclic petroleum resins, copolymerized petroleum resins, and hydrogenated petroleum resins. These can be used alone or in a combination of two or more.

Examples of thermoplastic elastomers include styrene elastomers, such as styrene-ethylene-butylene-styrene copolymer resin and styrene-ethylene-propylene-styrene; and olefin elastomers, such as ethylene-propylene copolymer resin, ethylene-butene copolymer resin, ethylene-vinyl acetate copolymer resin, and ethylene-ethyl acrylate copolymer resin. These can be used alone or in a combination of two or more.

Examples of plasticizers include liquid rubbers, such as polyisoprene and polybutene; and process oil. These can be used alone or in a combination of two or more.

In the adhesive composition of the present embodiment, the multifunctional polyisocyanate curing agent (B) can be used in combination with various curing agents other than the multifunctional polyisocyanate curing agent (B), within a range that does not impair the performance of the present invention. Examples of curing agents other than the multifunctional polyisocyanate curing agent (B) include a curing agent having a functional group that reacts with the acid-modified polyolefin (A). Examples of curing agents other than the multifunctional polyisocyanate curing agent (B) include an epoxy resin, a carbodiimide compound, an oxazoline compound, and a coupling agent.

Examples of epoxy resins include glycidyl ester-type epoxy resins, such as hexahydrophthalic acid glycidyl ester and dimer acid glycidyl ester; and alicyclic or aliphatic epoxides, such as triglycidyl isocyanurate, 3,4-epoxycyclohexylmethyl carboxylate, epoxidized polybutadiene, and epoxidized soybean oil; glycidyl ether-type epoxy resins; and glycidyl amine-type epoxy resins.

Examples of carbodiimide compounds include monocarbodiimide compounds, such as dimethyl carbodiimide, diisopropyl carbodiimide, dicyclohexyl carbodiimide, t-butyl isopropyl carbodiimide, diphenyl carbodiimide, and di-$\beta$-naphthyl carbodiimide; and polycarbodiimide compounds obtained by subjecting organic diisocyanates, such as aliphatic diisocyanates, aromatic diisocyanates, and alicyclic diisocyanates, to a decarboxylative condensation reaction in the absence of a solvent or in an inert solvent in the presence of a condensation catalyst.

Examples of oxazoline compounds include monooxazoline compounds, such as 2-oxazoline, 2-methyl-2-oxazoline2-phenyl-2-oxazoline, 2,5-dimethyl-2-oxazoline, and 2,4-diphenyl-2-oxazoline; dioxazoline compounds, such as 2,2'-(1,3-phenylene)-bis(2-oxazoline), 2,2'-(1,2-ethylene)-bis(2-oxazoline), 2,2'-(1,4-butylene)-bis(2-oxazoline), and 2,2'-(1,4-phenylene)-bis(2-oxazoline).

Examples of coupling agents include silane coupling agents and titanate coupling agents.

The adhesive composition of the present embodiment may comprise a keto-enol tautomeric compound in addition to the acid-modified polyolefin (A), the multifunctional polyisocyanate curing agent (B), and the organoaluminum compound (C), within a range that does not impair the performance of the present invention.

Examples of keto-enol tautomeric compounds include $\beta$-keto esters, such as methyl acetoacetate, ethyl acetoacetate, octyl acetoacetate, oleyl acetoacetate, lauryl acetoacetate, and stearyl acetoacetate; and $\beta$-diketones, such as acetylacetone, 2,4-hexanedione, and benzoylacetone. These compounds can protect the isocyanate groups in the multifunctional polyisocyanate curing agent (B), suppress a significant viscosity increase and gelation of the adhesive composition, and further improve the pot life properties of the adhesive composition.

When a keto-enol tautomeric compound is contained, the content of the keto-enol tautomeric compound is preferably 0.1 parts by mass or more and 3 parts by mass or less per 100 parts by mass of the multifunctional polyisocyanate (B).

The adhesive composition of the present embodiment can be obtained for use by incorporating various additives in addition to the acid-modified polyolefin (A), the multifunctional polyisocyanate curing agent (B), and the organoaluminum compound (C), within a range that does not impair the performance of the present invention. Examples of the additives include a flame retardant, a pigment, an anti-blocking agent, and a filler.

In one embodiment, the content of an organic zirconium compound or organic tin compound in the adhesive composition of the present embodiment is preferably less than 0.5 parts by mass, more preferably 0.3 parts by mass or less, even more preferably 0.1 parts by mass or less, still more preferably 0.05 parts by mass or less, particularly preferably 0.01 parts by mass or less, and most preferably 0 parts by mass, per 100 parts by mass of the acid-modified polyolefin (A).

### 2. Laminate

The laminate of the present embodiment can be obtained by bonding a polyolefin resin substrate and a metal substrate with the adhesive composition of the present embodiment.

The method for producing the laminate of the present embodiment may be performed according to conventionally known laminate producing techniques. For example, the adhesive composition of the present embodiment is applied to the surface of a metal substrate using a roll coater, bar coater, or the like, and then dried. After drying, while the layer of the adhesive composition of the present embodiment (adhesive layer) formed on the surface of the metal substrate is in a molten state, a polyolefin resin substrate is laminated and bonded (lamination bonding) to the surface of the adhesive layer to thereby obtain a laminate. The thickness of the adhesive layer formed by using the adhesive composition of the present embodiment is preferably 0.5 $\mu$m to 10 $\mu$m, more preferably 0.8 $\mu$m to 9.5 $\mu$m, and even more preferably 1.0 $\mu$m to 9 $\mu$m.

Polyolefin Resin Substrate

The polyolefin resin substrate may be widely selected from known polyolefin resins that are commonly used in this field. Examples of the polyolefin resin substrate include polyethylene, polypropylene, and ethylene-propylene copolymers. Among these, the polyolefin resin substrate is preferably polypropylene, and more preferably an unoriented polypropylene (cast polypropylene) film. The thickness of the polyolefin resin substrate is preferably 20 μm to 100 um, more preferably 25 μm to 95 μm, and even more preferably 30 μm to 90 μm. The polyolefin resin substrate may contain a pigment and various additives, or may be subjected to surface treatment, if necessary.

Metal Substrate

The metal substrate for use may be selected from, for example, various metals and alloys thereof, such as aluminum, copper, steel, chromium, zinc, duralumin, and die-cast. Examples of the forms of the metal substrate include metal foil, rolled steel sheets, panels, pipes, cans, and caps. The metal substrate is preferably aluminum foil from the viewpoint of processability and the like. Also, the metal substrate can typically be used in the form of a sheet with a thickness of 0.01 to 10 mm, and preferably a thickness of 0.02 to 5 mm, although the thickness varies depending on the purpose of use. The surface of the metal substrate may be subjected to surface treatment in advance or may be left untreated.

3. Packaging Material for Lithium-ion Battery

The packaging material for a lithium-ion battery of the present embodiment comprises the laminate of the present embodiment. The packaging material for a lithium-ion battery is a housing that packages a lithium-ion battery.
In one embodiment, the content of the laminate in the packaging material for a lithium-ion battery is typically more than 50 mass%, preferably 80 mass% or more, more preferably 90 mass% or more, even more preferably 95 mass% or more, and particularly preferably 99 mass% or more.
In one embodiment, the packaging material for a lithium-ion battery most preferably consists of a laminate.
The present invention provides inventions according to the following aspects.

Item 1. An adhesive composition comprising

an acid-modified polyolefin (A),
a multifunctional polyisocyanate curing agent (B), and
an organoaluminum compound (C),
wherein the acid-modified polyolefin (A) has a weight average molecular weight (Mw) within the range of 10,000 to 200,000.

Item 2. The adhesive composition according to Item 1, wherein the content of the multifunctional polyisocyanate curing agent (B) is 0.5 to 70 parts by mass per 100 parts by mass of the acid-modified polyolefin (A).

Item 3. The adhesive composition according to Item 1 or 2, wherein the content of the organoaluminum compound (C) is 0.01 to 2 parts by mass per 100 parts by mass of the acid-modified polyolefin (A).

Item 4. The adhesive composition according to any one of Items 1 to 3, wherein the acid-modified polyolefin (A) is a graft polymer having a structure in which at least one member selected from an $\alpha,\beta$-unsaturated carboxylic acid and an acid anhydride thereof is grafted to a polyolefin.

Item 5. The adhesive composition according to any one of Items 1 to 4, wherein the acid-modified polyolefin (A) has an acid value of 2 to 50 mgKOH/g.

Item 6. The adhesive composition according to any one of Items 1 to 5, wherein the organoaluminum compound (C) is an aluminum alcoholate compound and/or an aluminum chelate compound.

Item 7. The adhesive composition according to any one of Items 1 to 6, wherein the adhesive composition further comprises an organic solvent (D).

Item 8. The adhesive composition according to Item 7, wherein

the organic solvent (D) consists of a solvent (D1) and a solvent (D2),
the solvent (D1) is at least one solvent selected from the group consisting of aromatic hydrocarbon-based solvents, aliphatic hydrocarbon-based solvents, alicyclic hydrocarbon-based solvents, and halogenated hydrocarbon-based solvents, and

the solvent (D2) is at least one solvent selected from the group consisting of alcohol-based solvents, ketone-based solvents, ester-based solvents, and glycol ether-based solvents.

Item 9. The adhesive composition according to Item 8, wherein the mass ratio of the solvent (D1) to the solvent (D2) (solvent (D1)/solvent (D2)) is 50/50 to 97/3.

Item 10. The adhesive composition according to any one of Items 1 to 9, wherein the adhesive composition further comprises an acid anhydride group-containing monomer (E).

Item 11. The adhesive composition according to Item 10, wherein the content of the acid anhydride group-containing monomer (E) is 0.1 to 20 parts by mass per 100 parts by mass of the acid-modified polyolefin (A).

Item 12. The adhesive composition according to Item 10 or 11, wherein the acid anhydride group-containing monomer (E) contains a hydrocarbon group having 3 to 20 (3, 4, 5, 6, 7, 8, 9, 10, 11, 12, 13, 14, 15, 16, 17, 18, 19, or 20) carbon atoms.

Item 13. The adhesive composition according to any one of Items 1 to 12, wherein the content of the multifunctional polyisocyanate curing agent (B) is more preferably 1 to 65 parts by mass, even more preferably 2 to 60 parts by mass, still more preferably 3 to 55 parts by mass, still even more preferably 6 to 50 parts by mass, particularly preferably 10 to 45 parts by mass, and most preferably 15 to 40 parts by mass, per 100 parts by mass of the acid-modified polyolefin (A).

Item 14. The adhesive composition according to any one of Items 1 to 13, wherein the content of the organoaluminum compound (C) is more preferably 0.05 to 1.5 parts by mass, even more preferably 0.1 to 1.25 parts by mass, still more preferably 0.2 to 1.0 parts by mass, and particularly preferably 0.3 to 0.95 parts by mass per 100 parts by mass of the acid-modified polyolefin (A).

Item 15. The adhesive composition according to any one of Items 4 to 14, wherein the polyolefin is typically at least one member selected from the group consisting of homopolyethylene, homopolypropylene, and propylene-$\alpha$-olefin copolymers, preferably homopolypropylene and/or a propylene-$\alpha$-olefin copolymer, and more preferably a propylene-$\alpha$-olefin copolymer.

Item 16. The adhesive composition according to Item 15, wherein the $\alpha$-olefin in the propylene-$\alpha$-olefin copolymer is preferably ethylene and/or 1-butene, and more preferably 1-butene.

Item 17. The adhesive composition according to Item 15 or 16, wherein the content of the propylene component in the propylene-$\alpha$-olefin copolymer is preferably 50 mol% or more, more preferably 60 mol% or more, and even more preferably 70 mol% or more.

Item 18. The adhesive composition according to any one of Items 4 to 17, wherein the $\alpha,\beta$-unsaturated carboxylic acid and acid anhydride thereof is typically maleic acid, maleic anhydride, fumaric acid, itaconic acid, itaconic anhydride, mesaconic acid, citraconic acid, citraconic anhydride, aconitic acid, or aconitic anhydride, and preferably maleic anhydride.

Item 19. The adhesive composition according to any one of Items 1 to 18, wherein the acid-modified polyolefin (A) has an Mw of preferably 20,000 to 180,000, more preferably 30,000 to 160,000, particularly preferably 40,000 to 140,000, and most preferably 50,000 to 110,000.

Item 20. The adhesive composition according to any one of Items 1 to 19, wherein the content of an acid-modified chlorinated polyolefin in the adhesive composition is preferably 3 mass% or less, more preferably 2 mass% or less, even more preferably 1 mass% or less, still more preferably 0.5 mass% or less, particularly preferably 0.1 mass% or less, and most preferably 0 mass%.

Item 21. The adhesive composition according to any one of Items 1 to 20, wherein the acid-modified polyolefin (A) is preferably a maleic anhydride-modified homopolypropylene and/or a maleic anhydride-modified propylene-1-butene copolymer, and more preferably a maleic anhydride-modified homopolypropylene or a maleic anhydride-modified propylene-1-butene copolymer.

Item 22. The adhesive composition according to any one of Items 1 to 21, wherein the content of the multifunctional polyisocyanate curing agent (B) is more preferably 1 to 65 parts by mass, more preferably 2 to 60 parts by mass, even more preferably 3 to 55 parts by mass, still more preferably 6 to 50 parts by mass, particularly preferably 10 to 45 parts by mass, and most preferably 15 to 40 parts by mass, per 100 parts by mass of the acid-modified polyolefin (A).

Item 23. The adhesive composition according to any one of Items 1 to 22, wherein the content of the organoaluminum compound (C) is more preferably 0.05 to 1.5 parts by mass, even more preferably 0.1 to 1.25 parts by mass, still more preferably 0.2 to 1.0 part by mass, and particularly preferably 0.3 to 0.95 parts by mass, per 100 parts by mass of the acid-modified polyolefin (A).

Item 24. The adhesive composition according to any one of Items 1 to 23, wherein the acid-modified polyolefin (A) has an acid value of more preferably 3 to 45 mgKOH/g, even more preferably 5 to 40 mgKOH/g, and particularly preferably 7 to 35 mgKOH/g.

Item 25. The adhesive composition according to any one of Items 1 to 24, wherein the multifunctional polyisocyanate curing agent (B) is preferably a diisocyanate compound or a derivative of a diisocyanate compound, and more preferably a derivative of a diisocyanate compound.

Item 26. The adhesive composition according to any one of Items 1 to 24, wherein the multifunctional polyisocyanate curing agent (B) is preferably an isocyanurate-modified product of a diisocyanate compound and/or a biuret-modified product of a diisocyanate compound, more preferably at least one compound selected from the group consisting of isocyanurate-modified products of hexamethylene diisocyanate, adduct-modified products of hexamethylene diisocyanate, biuret-modified products of hexamethylene diisocyanate, uretdione-modified products of hexamethylene diisocyanate, and allophanate-modified products of hexamethylene diisocyanate, particularly preferably an isocyanurate-modified product of hexamethylene diisocyanate and/or a biuret-modified product of hexamethylene diisocyanate.

Item 27. The adhesive composition according to any one of Items 6 to 26, wherein the aluminum alcoholate compound is at least one compound selected from the group consisting of aluminum ethylate, aluminum isopropylate, aluminum diisopropylate mono-sec-butyrate, and aluminum sec-butylate.

Item 28. The adhesive composition according to any one of Items 6 to 27, wherein the organoaluminum compound (C) is an aluminum chelate compound.

Item 29. The adhesive composition according to Item 28, wherein the aluminum chelate compound is at least one compound selected from the group consisting of aluminum acetoacetate diisopropylate, aluminum ethyl acetoacetate diisopropylate, aluminum tris(ethyl acetoacetate), aluminum alkyl acetate diisopropylate, aluminum bis(ethyl acetoacetate) monoacetylacetonate, and aluminum tris(acetylacetonate).

Item 30. The adhesive composition according to any one of Items 1 to 29, wherein the content of the organoaluminum compound (C) is more preferably 0.05 to 1.5 parts by mass, even more preferably 0.1 to 1.25 parts by mass, still more preferably 0.2 to 1.0 part by mass, and particularly preferably 0.3 to 0.95 parts by mass, per 100 parts by mass of the acid-modified polyolefin (A).

Item 31. The adhesive composition according to any one of Items 1 to 30, wherein the content of the organoaluminum compound (C) is preferably 0.05 to 30 parts by mass, more preferably 0.25 to 20 parts by mass, even more preferably 0.5 to 16 parts by mass, still more preferably 0.9 to 12 parts by mass, still even more preferably 1.0 to 10 parts by mass, particularly preferably 1.1 to 8 parts by mass, and most preferably 1.2 to 6 parts by mass, per 100 parts by mass of the multifunctional polyisocyanate curing agent (B).

Item 32. The adhesive composition according to any one of Items 7 to 31, wherein the content of the organic solvent (D) is preferably 80 to 2000 parts by mass, more preferably 100 to 1600 parts by mass, even more preferably 150 to 1200 parts by mass, still more preferably 200 to 1000 parts by mass, still even more preferably 300 to 950 parts by mass, particularly preferably 400 to 900 parts by mass, and most preferably 425 to 800 parts by mass, per 100 parts by mass of the acid-modified polyolefin (A).

Item 33. The adhesive composition according to any one of Items 7 to 32, wherein

the organic solvent (D) consists of a solvent (D1) and a solvent (D2),
the solvent (D1) is an aromatic hydrocarbon-based solvent or an alicyclic hydrocarbon-based solvent, and
the solvent (D2) is a ketone-based solvent.

Item 34. The adhesive composition according to any one of Items 7 to 33, wherein

the organic solvent (D) consists of a solvent (D1) and a solvent (D2),
the solvent (D1) is an alicyclic hydrocarbon-based solvent, and
the solvent (D2) is a ketone-based solvent.

Item 35. The adhesive composition according to any one of Items 8 to 34, wherein the mass ratio of the solvent (D1) to the solvent (D2) (solvent (D1)/solvent (D2)) is more preferably 55/45 to 95/5, even more preferably 60/40 to 90/10, and particularly preferably 70/30 to 80/20.

Item 36. The adhesive composition according to any one of Items 10 to 35, wherein the content of the acid anhydride group-containing monomer (E) is more preferably 0.3 parts by mass or more and 10 parts by mass or less, even more preferably 0.5 parts by mass or more and 8 parts by mass or less, or 1 part by mass or more and 5 parts by mass or less, per 100 parts by mass of the acid-modified polyolefin (A).

Item 37. The adhesive composition according to any one of Items 10 to 36, wherein the acid anhydride group contained in the acid anhydride group-containing monomer (E) is

preferably an acid anhydride group having a cyclic structure, more preferably a group derived from succinic anhydride, a group derived from maleic anhydride, or a group derived from glutaric anhydride, and
even more preferably a group derived from succinic anhydride.

Item 38. The adhesive composition according to any one of Items 10 to 37, wherein the acid anhydride group-containing monomer (E) has a molecular weight of preferably 100 g/mol or more and 500 g/mol or less, more preferably 150 g/mol or more and 450 g/mol or less, and even more preferably 200 g/mol or more and 400 g/mol or less.

Item 39. The adhesive composition according to any one of Items 10 to 38, wherein the acid anhydride group-containing monomer (E) has an acid value of preferably 150 mgKOH/g or more and 800 mgKOH/g or less, more preferably 250 mgKOH/g or more and 600 mgKOH/g or less, and even more preferably 300 mgKOH/g or more and 500 mgKOH/g or less.

Item 40. The adhesive composition according to any one of Items 10 to 39, wherein the acid anhydride group-containing monomer (E) contains preferably a linear alkyl group having 3 or more and 20 or less (3, 4, 5, 6, 7, 8, 9, 10, 11, 12, 13, 14, 15, 16, 17, 18, 19, or 20) carbon atoms,

more preferably a linear alkyl group having 5 or more and 18 or less (5, 6, 7, 8, 9, 10, 11, 12, 13, 14, 15, 16, 17, or 18) carbon atoms,
even more preferably a linear alkyl group having 8 or more and 16 or less (8, 9, 10, 11, 12, 13, 14, 15, or 16) carbon atoms, and particularly preferably a linear alkyl group having 11 or more and 15 or less (11, 12, 13, 14, or 15) carbon atoms.

Item 41. The adhesive composition according to any one of Items 10 to 40, wherein the acid anhydride group-containing monomer (E) is at least one compound selected from the group consisting of succinic anhydride, maleic anhydride, glutaric anhydride, butylsuccinic anhydride, hexylsuccinic anhydride, octylsuccinic anhydride, dodecylsuccinic anhydride, dodecenylsuccinic anhydride, tetrapropenylsuccinic anhydride, butylmaleic anhydride, pentylmaleic anhydride, hexylmaleic anhydride, octylmaleic anhydride, decylmaleic anhydride, dodecylmaleic anhydride, butylglutamic anhydride, hexylglutamic anhydride, heptylglutamic anhydride, octylglutamic anhydride, decylglutamic anhydride, dodecylglutamic anhydride, pyromellitic dianhydride, trimellitic anhydride, benzophenonetetracarboxylic dianhydride, tetrahydrophthalic anhydride, methyltetrahydrophthalic anhydride, methylpentahydrophthalic anhydride, methyltrihydrophthalic anhydride, trialkyltetrahydrophthalic anhydride, methylcyclohexenedicarboxylic anhydride, chlorendic anhydride, and tetrabromophthalic anhydride.

Item 42. The adhesive composition according to any one of Items 10 to 40, wherein the acid anhydride group-containing monomer (E) is dodecenylsuccinic anhydride.

Item 43. The adhesive composition according to any one of Items 1 to 42, wherein the content of an organic zirconium compound or an organic tin compound in the adhesive composition is preferably less than 0.5 parts by mass, more preferably 0.3 parts by mass or less, even more preferably 0.1 parts by mass or less, still more preferably 0.05 parts by mass or less, particularly preferably 0.01 parts by mass or less, and most preferably 0 parts by mass, per 100 parts by mass of the acid-modified polyolefin (A).

Item 44. The adhesive composition according to any one of Items 1 to 43 for use in bonding a polyolefin resin substrate and a metal substrate.

Item 45. A laminate in which a polyolefin resin substrate and a metal substrate are bonded with the adhesive composition of any one of Items 1 to 43.

Item 46. A packaging material for a lithium-ion battery, comprising the laminate of Item 45.

Examples

The present invention is described below in more detail with reference to Examples. However, the scope of the present invention is not limited to these Examples. Below, "room temperature" refers to a temperature within the range of 20°C to 25°C.

Measurement of Acid Value

The acid value (mgKOH/g) of the acid-modified polyolefin (A) means the amount of KOH required to neutralize 1 g of the acid-modified polyolefin (A). The acid value of the acid-modified polyolefin (A) was measured according to the test method of JIS K 0070 (1992). Specifically, 1 g of the acid-modified polyolefin (A) was dissolved in 100 g of xylene whose temperature was adjusted to 100°C, and then titrated at 100°C with a 0.1 mol/L solution of potassium hydroxide in ethanol (product name: 0.1 mol/L Potassium Hydroxide Ethanolic Solution, produced by Wako Pure Chemical Industries, Ltd.) using phenolphthalein as an indicator. Here, the amount of potassium hydroxide required for the titration was converted into milligrams, and the acid value (mgKOH/g) of the acid-modified polyolefin (A) was calculated.

Measurement of Proportion of Acetone-extracted Components

The proportion of acetone-extracted components (mass%) in the acid-modified polyolefin (A) was measured using a Soxhlet extractor with acetone under reflux for 2 hours. Specifically, 50 g of the acid-modified polyolefin (A) was weighed into a cylindrical filter paper and placed in a Soxhlet extraction tube. Then, the apparatus was assembled by connecting a condenser to a flat-bottom flask containing 1100 mL of acetone, and extraction was performed with acetone under reflux in a water bath at 90°C for 2 hours. Thereafter, the cylindrical filter paper was removed, and the acetone extract in the flat-bottom flask was distilled off, followed by further vacuum drying at 100°C for 1 hour. Then, the weight (g) of the residue was measured, and the proportion of acetone-extracted components in the acid-modified polyolefin (A) was calculated according to the following formula.

Proportion of acetone-extracted components (mass%) in the acid-modified polyolefin (A) = (Weight of extract residue/ Amount of sample collected) $\times$ 100

Measurement of Storage Modulus (E') at 25°C

The storage modulus (E') (MPa) of the acid-modified polyolefin (A) was measured according to the test method of JIS K 7244-4 (1999). Specifically, the acid-modified polyolefin (A) was dissolved in a mixed solvent of cyclohexane/methyl ethyl ketone at a mass ratio of 80%/20% to obtain a solution. The obtained solution was applied to a Teflon (registered trademark) sheet to a film thickness of about 50 $\mu$m and dried to obtain a dry coating film. The coating film was cut into a test piece with a width of 5 mm and a length of 25 mm. The storage modulus (E') value (MPa) at 25°C of the test piece was measured using a dynamic viscoelastic analyzer (DVA-200, produced by IT Measurement and Control Co., Ltd.) at a frequency of 10 Hz while raising the temperature from -50°C to 80°C at a rate of 5°C/min.

Measurement of Tensile Elongation at Break (Eb) at 25°C

The tensile elongation at break (Eb) (%) of the acid-modified polyolefin (A) was measured according to the test method of JIS K 7161 (2014). Specifically, the acid-modified polyolefin (A) was dissolved in a mixed solvent of cyclohexane/methyl ethyl ketone at a mass ratio of 80%/20% to obtain a solution. The obtained solution was applied to a Teflon (registered trademark) sheet to a film thickness of 50 μm and dried to obtain a dry coating film. The coating film was cut into a test piece with a width of 15 mm and a length of 70 mm. The obtained test piece was subjected to a tensile test in an environment of 25°C using a tensile tester (Tensilon RTM-100, produced by Orientec Corporation) at a chuck distance of 40 mm and a tensile speed of 50 mm/min, and the tensile elongation at break (%) was calculated according to the following formula.

Tensile elongation at break (Eb) (%) of the acid-modified polyolefin (A) = [(Length of the test piece at break - Length of the test piece before test)/Length of the test piece at break] × 100

Measurement of Weight Average Molecular Weight (Mw)

The weight average molecular weight (Mw) of the acid-modified polyolefin (A) was measured using an Alliance e2695 gel permeation chromatograph, produced by Nihon Waters K. K. The measurement conditions for gel permeation chromatography (GPC) were as follows. The calibration curve was obtained by preparing tetrahydrofuran solutions in which each of the polystyrene standards of "Molecular Weight Standard (fat-soluble polymer) MW 500" (Model 2012-2), "Molecular Weight Standard (fat-soluble polymer) MW 2,000" (Model 2012-5), "Molecular Weight Standard (fat-soluble polymer) MW 10,000" (Model 2012-9), "Molecular Weight Standard (fat-soluble polymer) MW 20,000" (Model 2013-1), "Molecular Weight Standard (fat-soluble polymer) MW 50,000" (Model 2013-3), and "Molecular Weight Standard (fat-soluble polymer) MW 200,000" (Model 2013-7), all produced by GL Sciences Inc., was dissolved at a concentration of 0.5%, filtering the solutions, placing them in vials, and measuring them.

GPC Measurement Conditions

- Standard substance: Polystyrene resin (weight average molecular weight: 500, 2,000, 50,000, and 200,000)
- Concentration of the acid-modified polyolefin (A): 0.5 mass%
- Mobile phase: Tetrahydrofuran (THF)
- Column: Shodex KF-806 and KF-803
- Column temperature: 40°C
- Flow rate: 1.0 ml/min
- Detector: Photodiode array detector (UV detection at a wavelength of 254 nm)

Measurement of Melting Point (Tm) and Heat of Fusion (ΔH)

The melting point (Tm) (°C) and heat of fusion (ΔH) (J/g) of the acid-modified polyolefin (A) were measured as follows. Specifically, a differential scanning calorimeter (DSC) (Q-2000, produced by TA Instruments Japan) was used. About 5 mg of the acid-modified polyolefin (A) as a sample was heated from -50°C to 250°C at a rate of 20°C/min, maintained in a molten state for 5 minutes, then cooled to -50°C at a rate of 5°C/min and maintained at this temperature for 5 minutes, and then heated from -50°C to 250°C at a rate of 5°C/min to allow melting. The temperature at which the apex of the melting peak appeared was defined as the melting point (Tm). The heat of fusion (ΔH) was calculated from the integrated value of the melting peak. When multiple peaks were detected during measurement, the temperature and the integrated value of the peak detected on the highest temperature side were defined as the melting point (Tm) and the heat of fusion (ΔH) of the acid-modified polyolefin (A), respectively.

Production Example of Acid-Modified Polyolefin (A)

Production Example 1

100 parts by mass of a propylene-1-butene copolymer (propylene component content: 78 mol%, 1-butene component content: 22 mol%, storage modulus at 25°C: 320 MPa, tensile elongation at break at 25°C: 760%), 233 parts by mass of toluene, 1 part by mass of maleic anhydride, and 0.5 parts by mass of di-tert-butyl peroxide were added to a 1L autoclave, and the mixture was heated to 140°C and then further stirred for 1 hour (here, "stirred for 1 hour" means that the reaction was allowed to proceed for 1 hour). Subsequently, the obtained reaction liquid was cooled to 100°C and then poured while stirring into a container containing 717 parts by mass of toluene and 950 parts by mass of methyl ethyl ketone preheated to 40°C, and the mixture was then cooled to 40°C, further stirred for 30 minutes, and further cooled to 25°C to thereby precipitate a resin (here, the operation of pouring the reaction liquid into a solvent, such as methyl ethyl ketone, while stirring, and cooling to precipitate a resin is referred to as "reprecipitation"). Subsequently, the slurry containing the resin was centrifuged to separate the acid-modified propylene-1-butene copolymer grafted with maleic anhydride from (poly)maleic anhydride and low-molecular-weight substances. Further, the acid-modified propylene-1-butene copolymer obtained by centrifugation was added while stirring to a container containing 2000 parts by mass of fresh methyl ethyl ketone preheated to 25°C, and stirring was continued for 1 hour. Thereafter, the slurry was centrifuged to further separate the acid-modified propylene-1-butene copolymer from (poly)maleic anhydride and low-molecular-weight substances. This operation was performed twice to achieve purification (here, the operation of adding the acid-modified propylene-1-butene copolymer obtained by centrifugation to methyl ethyl ketone while stirring, and then centrifuging again to enhance purification is referred to as "reslurry"). After purification, the resulting product was dried at 70°C under reduced pressure for 5 hours to thereby obtain a maleic anhydride-modified propylene-1-butene copolymer A-1, which is an acid-modified polyolefin (propylene component content: 78 mol%, 1-butene component content: 22 mol%, acid value: 2 mgKOH/g, proportion of acetone-extracted components: 0.1 mass%, storage modulus (E') at 25°C: 300 MPa, tensile elongation at break (Eb) at 25°C: 600%, weight average molecular weight (Mw): 190,000, melting point (Tm): 78°C, heat of fusion ($\Delta H$): 37 J/g).

Production Example 2

A maleic anhydride-modified propylene-1-butene copolymer A-2, which is an acid-modified polyolefin (propylene component content: 78 mol%, 1-butene component content: 22 mol%, acid value: 5 mgKOH/g, proportion of acetone-extracted components: 1.8 mass%, storage modulus (E') at 25°C: 280 MPa, tensile elongation at break (Eb) at 25°C: 650%, weight average molecular weight (Mw): 180,000, melting point (Tm): 78°C, heat of fusion ($\Delta H$): 36 J/g), was obtained in the same manner as in Production Example 1, except that the amount of maleic anhydride added was changed to 3 parts by mass, the number of reslurry operations was changed to 1, and the amount of methyl ethyl ketone added during the reslurry operation was changed to 1000 parts by mass.

Production Example 3

A maleic anhydride-modified propylene-1-butene copolymer A-3, which is an acid-modified polyolefin (propylene component content: 78 mol%, 1-butene component content: 22 mol%, acid value: 48 mgKOH/g, proportion of acetone-extracted components: 0.1 mass%, storage modulus (E') at 25°C: 180 MPa, tensile elongation at break (Eb) at 25°C: 350%, weight average molecular weight (Mw): 31,000, melting point (Tm): 75°C, heat of fusion ($\Delta H$): 31 J/g), was obtained in the same manner as in Production Example 1, except that the amount of toluene added was changed to 150 parts by mass, the amount of maleic anhydride added was changed to 40 parts by mass, the amount of di-tert-butyl peroxide added was changed to 8 parts by mass, the reaction time was changed to 3 hours, the solvent used for reprecipitation was changed to 700 parts by mass of methyl ethyl ketone, and the number of reslurry operations was changed to 5.

Production Example 4

A maleic anhydride-modified propylene-1-butene copolymer A-4, which is an acid-modified polyolefin (propylene component content: 78 mol%, 1-butene component content: 22 mol%, acid value: 48 mgKOH/g, proportion of acetone-extracted components: 1.8 mass%, storage modulus (E') at 25°C: 150 MPa, tensile elongation at break (Eb) at 25°C: 300%, weight average molecular weight (Mw): 27,000, melting point (Tm): 75°C, heat of fusion ($\Delta H$): 30 J/g), was obtained in the same manner as in Production Example 1, except that the amount of toluene added was changed to 150 parts by mass, the amount of maleic anhydride added was changed to 40 parts by mass, the amount of di-tert-butyl peroxide added was changed to 8 parts by mass, the reaction time was changed to 3 hours, the solvent used for reprecipitation was changed to 700 parts by mass of methyl ethyl ketone, the solvent used for reslurry was changed to 1000 parts by mass of methyl ethyl ketone, and the number of reslurry operations was changed to 3.

Production Example 5

A maleic anhydride-modified propylene-1-butene copolymer A-5, which is an acid-modified polyolefin (propylene component content: 78 mol%, 1-butene component content: 22 mol%, acid value: 25 mgKOH/g, proportion of acetone-extracted components: 0.9 mass%, storage modulus (E') at 25°C: 400 MPa, tensile elongation at break (Eb) at 25°C: 500%, weight average molecular weight (Mw): 60,000, melting point (Tm): 77°C, heat of fusion ($\Delta H$): 35 J/g), was obtained in the same manner as in Production Example 1, except that the amount of toluene added was changed to 150 parts by mass, the amount of maleic anhydride added was changed to 20 parts by mass, the amount of di-tert-butyl peroxide added was changed to 6 parts by mass, the reaction time was changed to 3 hours, the solvent used for reprecipitation was changed to 700 parts by mass of methyl ethyl ketone, the solvent used for reslurry was changed to 1000 parts by mass of methyl ethyl ketone, and the number of reslurry operations was changed to 2.

Production Example 6

A maleic anhydride-modified propylene-1-butene copolymer A-6, which is an acid-modified polyolefin (propylene component content: 70 mol%, 1-butene component content: 30 mol%, acid value: 25 mgKOH/g, proportion of acetone-extracted components: 1.0 mass%, storage modulus (E') at 25°C: 12 MPa, tensile elongation at break (Eb) at 25°C: 900%, weight average molecular weight (Mw): 60,000, melting point (Tm): 58°C, heat of fusion (ΔH): 7 J/g), was obtained in the same manner as in Production Example 1, except that 100 parts by mass of a propylene-1-butene copolymer (propylene component content 70 mol%, 1-butene component content 30 mol%, storage modulus at 25°C: 52 MPa, tensile elongation at break at 25°C: 1050%) was used, the amount of toluene added was changed to 150 parts by mass, the amount of maleic anhydride added was changed to 30 parts by mass, the amount of di-tert-butyl peroxide added was changed to 6 parts by mass, the reaction time was changed to 3 hours, the solvent used for reprecipitation was changed to 700 parts by mass of methyl ethyl ketone, the solvent used for reslurry was changed to 1000 parts by mass of methyl ethyl ketone, and the number of reslurry operations was changed to 2.

Production Example 7

A maleic anhydride-modified homopolypropylene A-7, which is an acid-modified polyolefin (acid value: 25 mgKOH/g, proportion of acetone-extracted components: 0.9 mass%, storage modulus (E') at 25°C: 1800 MPa, tensile elongation at break (Eb) at 25°C: 60%, weight average molecular weight (Mw): 60,000, melting point (Tm): 75°C, heat of fusion (ΔH): 5 J/g), was obtained in the same manner as in Production Example 1, except that 100 parts by mass of homopolypropylene (propylene homopolymer, storage modulus at 25°C: 2100 MPa, tensile elongation at break at 25°C: 900%) was used, the amount of toluene added was changed to 150 parts by mass, the amount of maleic anhydride added was changed to 30 parts by mass, the amount of di-tert-butyl peroxide added was changed to 6 parts by mass, the reaction time was changed to 3 hours, the solvent used for reprecipitation was changed to 700 parts by mass of methyl ethyl ketone, the solvent used for reslurry was changed to 1000 parts by mass of methyl ethyl ketone, and the number of reslurry operations was changed to 2.

Production Example 8

A maleic anhydride-modified propylene-1-butene copolymer A-8, which is an acid-modified polyolefin (propylene component content: 90 mol%, 1-butene component content: 10 mol%, acid value: 25 mgKOH/g, proportion of acetone-extracted components: 1.0 mass%, storage modulus (E') at 25°C: 2350 MPa, tensile elongation at break (Eb) at 25°C: 38%, weight average molecular weight (Mw): 60,000, melting point (Tm): 125°C, heat of fusion (ΔH): 63 J/g), was obtained in the same manner as in Production Example 1, except that 100 parts by mass of a propylene-1-butene copolymer (propylene component content: 90 mol%, 1-butene component content: 10 mol%, storage modulus at 25°C: 2720 MPa, tensile elongation at break at 25°C: 400%) was used, the amount of toluene added was changed to 186 parts by mass, the amount of maleic anhydride added was changed to 20 parts by mass, the amount of di-tert-butyl peroxide added was changed to 6 parts by mass, the reaction time was changed to 3 hours, the solvent used for reprecipitation was changed to 700 parts by mass of methyl ethyl ketone, the solvent used for reslurry was changed to 1000 parts by mass of methyl ethyl ketone, and the number of reslurry operations was changed to 2.

Production Example 9

A maleic anhydride-modified propylene-1-butene copolymer A-9, which is an acid-modified polyolefin (propylene component content: 78 mol%, 1-butene component content: 22 mol%, acid value: 1 mgKOH/g, proportion of acetone-extracted components: 0.1 mass%, storage modulus (E') at 25°C: 290 MPa, tensile elongation at break (Eb) at 25°C: 700%, weight average molecular weight (Mw): 210,000, melting point (Tm): 78°C, heat of fusion (ΔH): 40 J/g), was obtained in the same manner as in Production Example 1, except that 100 parts by mass of a propylene-1-butene copolymer (propylene component content: 78 mol%, 1-butene component content: 22 mol%, storage modulus at 25°C: 320 MPa, tensile elongation at break at 25°C: 760%) was used, the amount of toluene added was changed to 186 parts by mass, the amount of maleic anhydride added was changed to 0.5 parts by mass, the amount of di-tert-butyl peroxide added was changed to 0.1 parts by mass, the reaction time was changed to 3 hours, the solvent used for reprecipitation was changed to 700 parts by mass of methyl ethyl ketone, and the solvent used for reslurry was changed to 1000 parts by mass of methyl ethyl ketone.

Production Example 10

A maleic anhydride-modified propylene-1-butene copolymer A-10, which is an acid-modified polyolefin (propylene component content: 90 mol%, 1-butene component content: 10 mol%, acid value: 25 mgKOH/g, proportion of acetone-extracted components: 1.0 mass%, storage modulus (E') at 25°C: 200 MPa, tensile elongation at break (Eb) at 25°C: 35%, weight average molecular weight (Mw): 9,000, melting point (Tm): 75°C, heat of fusion ($\Delta$H): 35 J/g), was obtained in the same manner as in Production Example 1, except that 100 parts by mass of a propylene-1-butene copolymer (propylene component content: 90 mol%, 1-butene component content: 10 mol%, storage modulus at 25°C: 2720 MPa, tensile elongation at break at 25°C: 400%) was used, the amount of toluene added was changed to 186 parts by mass, the amount of maleic anhydride added was changed to 25 parts by mass, the amount of di-tert-butyl peroxide added was changed to 9 parts by mass, the reaction time was changed to 5 hours, the solvent used for reprecipitation was changed to 700 parts by mass of methyl ethyl ketone, the solvent used for reslurry was changed to 1000 parts by mass of methyl ethyl ketone, and the number of reslurry operations was changed to 2.

Production of Main Agent 1

100 parts by mass of the maleic anhydride-modified propylene-1-butene copolymer (A-1) obtained in Production Example 1, 5 parts by mass of (E-1) as an acid anhydride group-containing monomer (E), and 417 parts by mass of a solvent (D1) (methylcyclohexane) and 179 parts by mass of a solvent (D2) (methyl ethyl ketone) as organic solvents (D) were placed in a 500 ml four-necked flask equipped with a water-cooled reflux condenser and a stirrer, and the mixture was heated to 80°C while stirring. After stirring was continued at 80°C for 1 hour, the mixture was cooled to room temperature to obtain Main Agent 1. Table 1 shows the amounts of the components in Main Agent 1 and the solution state of Main Agent 1.

Production of Main Agents 2 to 19

Main Agents 2 to 19 were produced in the same manner as that for Main Agent 1, except that the acid-modified polyolefin (A), the organic solvent (D), and the acid anhydride group-containing monomer (E) were changed as shown in Table 1. Table 1 shows the amounts of the components in Main Agents 2 to 19 and the solution states of Main Agents 2 to 19.

Table 1

| | | Main agent 1 | Main agent 2 | Main agent 3 | Main agent 4 | Main agent 5 | Main agent 6 | Main agent 7 | Main agent 8 | Main agent 9 | Main agent 10 | Main agent 11 | Main agent 12 | Main agent 13 | Main agent 14 | Main agent 15 | Main agent 16 | Main agent 17 | Main agent 18 | Main agent 19 |
|---|---|---|---|---|---|---|---|---|---|---|---|---|---|---|---|---|---|---|---|---|
| Acid-modified polyolefin (A) (parts by mass) | Maleic anhydride-modified propylene-1-butene copolymer A-1 (Proportion of acetone-extracted components = 0.1 mass%) (Acid value = 2, E' = 300 MPa, Eb = 600%) (Mw = 190,000, Tm = 78°C, ΔH = 37J/g) | 100 | | | | | | | | | | | | | | | | | | |
| | Maleic anhydride-modified propylene-1-butene copolymer A-2 (Proportion of acetone-extracted components = 1.8 mass%) (Acid value = 5) (E' = 280 MPa, Eb = 650%) (Mw = 180,000, Tm = 78°C, ΔH = 36J/g) | | 100 | | | | | | | | | | | | | | | | | |
| | Maleic anhydride-modified propylene-1-butene copolymer A-3 (Proportion of acetone-extracted components = 0.1 mass%) (Acid value = 48, E' = 180 MPa, Eb = 350%) (Mw = 31,000, Tm = 75°C, ΔH = 31J/g) | | | 100 | | | | | | | | | | | | | | | | |
| | Maleic anhydride-modified propylene-1-butene copolymer A-4 (Proportion of acetone-extracted components = 1.8 mass%) (Acid value = 48, E' = 150 MPa, Eb = 300%) (Mw = 27,000, Tm = 75°C, ΔH = 30J/g) | | | | 100 | | | | | | | | | | | | | | | |
| | Maleic anhydride-modified propylene-1-butene copolymer A-5 (Proportion of acetone-extracted components = 0.9 mass%) (Acid value = 25, E' = 400 MPa, Eb = 500%) (Mw = 60,000, Tm = 77°C, ΔH = 35J/g) | | | | | 100 | | | 100 | 100 | 100 | 100 | 100 | 100 | 100 | | 100 | 100 | | |
| | Maleic anhydride-modified propylene-1-butene copolymer A-6 (Proportion of acetone-extracted components = 1.0 mass%) (Acid value = 25, E' = 12 MPa, Eb = 900%) (Mw = 60,000, Tm = 58°C, ΔH = 7 J/g) | | | | | | 100 | | | | | | | | | | | | | |
| | Maleic anhydride-modified homopolypropylene A-7 (Proportion of acetone-extracted components = 0.9 mass%) (Acid value = 25, E' = 1800 MPa, Eb = 60%) (Mw = 60,000, Tm = 75°C, ΔH = 5 J/g) | | | | | | | 100 | | | | | | | | | | | | |
| | Maleic anhydride-modified propylene-1-butene copolymer A-8 (Proportion of acetone-extracted components = 1.0 mass%) (Acid value = 25, E' = 2350 MPa, Eb = 38%) (Mw = 60,000, Tm = 125°C, ΔH = 63 J/g) | | | | | | | | | | | | | | | 100 | | | | |
| | Maleic anhydride-modified propylene-1-butene copolymer A-9 (Proportion of acetone-extracted components = 0.1 mass%) (Acid value = 1, E' = 290 MPa, Eb = 700%) (Mw = 210,000, Tm = 78°C, ΔH = 40 J/g) | | | | | | | | | | | | | | | | | | 100 | |
| | Maleic anhydride-modified propylene-1-butene copolymer A-10 (Proportion of acetone-extracted components = 1.0 mass%) (Acid value = 25, E' = 200 MPa, Eb = 35%) (Mw = 9,000, Tm = 75°C, ΔH = 35 J/g) | | | | | | | | | | | | | | | | | | | 100 |
| Acid anhydride group-containing monomer (E) (parts by mass) | E-1 | 5 | 5 | 5 | 5 | 5 | 5 | 5 | 5 | 5 | 5 | 5 | 5 | 5 | 5 | 5 | 1 | 18 | 5 | 5 |
| Organic solvent (D) (parts by mass) | Solvent (D1) (methylcyclohexane) | 417 | 417 | 417 | 417 | 417 | 417 | 417 | 662 | 74 | | 417 | | 210 | 407 | 417 | 417 | 417 | 417 | 417 |
| | Solvent (D1) (toluene) | | | | | | | | | | 417 | | 417 | | | | | | | |
| | Solvent (D2) (methyl ethyl ketone) | 179 | 179 | 179 | 179 | 179 | 179 | 179 | 283 | 32 | 179 | | | 210 | 13 | 179 | 179 | 179 | 179 | 179 |
| | Solvent (D2) (methyl isobutyl ketone) | | | | | | | | | | | 179 | 179 | | | | | | | |
| Solution state of Main Agent | Solution viscosity at 25°C (mPa·s) | 210 | 250 | 30 | 40 | 50 | 45 | 50 | 25 | 750 | 90 | 55 | 60 | 80 | 650 | 190 | 60 | 40 | 400 | 40 |
| | Evaluation | B | B | A | A | A | A | A | A | B | A | A | A | A | B | A | A | A | B | A |

Unit of the acid value of acid-modified polyolefin (A): mgKOH/g

The materials used in the Examples and Comparative Examples are as follows.

Multifunctional polyisocyanate curing agent (B)

B-1: Isocyanurate-modified product of hexamethylene diisocyanate, Sumidur (registered trademark) N-3300 (produced by Bayer Corporation)

B-2: Biuret-modified product of hexamethylene diisocyanate, Duranate (registered trademark) 24A-100 (produced by Asahi Kasei Chemicals Corporation)

Organoaluminum Compound (C)

C-1: Aluminum bis(ethyl acetoacetate)monoacetylacetonate (Aluminum chelate D, produced by Kawaken Fine Chemicals Co., Ltd.)

Other Organometallic Compound X

X-1: Organic zirconium compound (zirconium tetraacetylacetonate) (ORGATIX ZC700, produced by Matsumoto Fine Chemical Co., Ltd.)

X-2: Organic tin compound (dibutyltin dilaurate) (produced by Tokyo Chemical Industry Co., Ltd., an industrial reagent)

Acid anhydride group-containing monomer (E)

E-1: Dodecenylsuccinic anhydride (RIKACID DDSA, produced by New Japan Chemical Co., Ltd., molecular weight: 266 g/mol, acid value: 417 mgKOH/g)

Example 1

667 parts by mass of Main Agent 1, 35 parts by mass of Sumidur (registered trademark) N-3300 (B-1) as a multifunctional polyisocyanate curing agent (B), and 0.5 parts by mass of (C-1) as an organoaluminum compound (C) were mixed and stirred with a magnetic stirrer for 10 minutes at an ambient temperature of 25°C to thereby obtain an adhesive composition.

Examples 2 to 22 and Comparative Examples 1 to 6

Adhesive compositions were obtained in the same manner as in Example 1, except that Main Agents 2 to 19 were used, and the multifunctional polyisocyanate curing agent (B) and the organoaluminum compound (C) were changed as shown in Tables 2 and 3.

Table 2

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 | Ex. 15 | Ex. 16 | Ex. 17 | Ex. 18 | Ex. 19 | Ex. 20 | Ex. 21 | Ex. 22 |
|---|---|---|---|---|---|---|---|---|---|---|---|---|---|---|---|---|---|---|---|---|---|---|---|
| Main agent (parts by mass) | Main Agent 1 | 667 | | | | | | | | | | | | | | | | | | | | | |
| | Main Agent 2 | | 667 | | | | | | | | | | | | | | | | | | | | |
| | Main Agent 3 | | | 667 | | | | | | | | | | | | | | | | | | | |
| | Main Agent 4 | | | | 667 | | | | | | | | | | | | | | | | | | |
| | Main Agent 5 | | | | | 667 | 667 | 667 | 667 | 667 | 667 | | | | | | | | | | | | |
| | Main Agent 6 | | | | | | | | | | | 667 | | | | | | | | | | | |
| | Main Agent 7 | | | | | | | | | | | | 667 | | | | | | | | | | |
| | Main Agent 8 | | | | | | | | | | | | | 1000 | | | | | | | | | |
| | Main Agent 9 | | | | | | | | | | | | | | 200 | | | | | | | | |
| | Main Agent 10 | | | | | | | | | | | | | | | 667 | | | | | | | |
| | Main Agent 11 | | | | | | | | | | | | | | | | 667 | | | | | | |
| | Main Agent 12 | | | | | | | | | | | | | | | | | 667 | | | | | |
| | Main Agent 13 | | | | | | | | | | | | | | | | | | 500 | | | | |
| | Main Agent 14 | | | | | | | | | | | | | | | | | | | 500 | | | |
| | Main Agent 15 | | | | | | | | | | | | | | | | | | | | 667 | | |
| | Main Agent 16 | | | | | | | | | | | | | | | | | | | | | 667 | |
| | Main Agent 17 | | | | | | | | | | | | | | | | | | | | | | 667 |
| Multifunctional polyisocyanate curing agent (B) (parts by mass) | B-1 | 35 | 35 | 35 | 35 | 35 | | 35 | 35 | 2 | 60 | 35 | 35 | 35 | 35 | 35 | 35 | 35 | 35 | 35 | 35 | 35 | 35 |
| | B-2 | | | | | | 35 | | | | | | | | | | | | | | | | |
| Organoaluminum compound (C) (parts by mass) | C-1 | 0.5 | 0.5 | 0.5 | 0.5 | 0.5 | 0.5 | 0.02 | 0.9 | 0.5 | 0.5 | 0.5 | 0.5 | 0.5 | 0.5 | 0.5 | 0.5 | 0.5 | 0.5 | 0.5 | 0.5 | 0.5 | 0.5 |
| Laminating temperature (°C) | | 80 | 80 | 80 | 80 | 80 | 80 | 80 | 80 | 80 | 80 | 80 | 80 | 80 | 80 | 80 | 80 | 80 | 80 | 80 | 120 | 80 | 80 |
| Pot life properties | Viscosity increase rate (%) | 70 | 80 | 85 | 90 | 60 | 55 | 40 | 120 | 10 | 140 | 60 | 70 | 10 | 140 | 70 | 75 | 90 | 25 | 170 | 90 | 60 | 45 |
| | Evaluation | B | B | B | B | B | B | A | B | A | B | B | B | A | B | B | B | B | A | B | B | B | A |
| Adhesion | Peel strength (N/cm) | 20.0 | 19.0 | 11.0 | 10.0 | 18.5 | 17.5 | 16.0 | 19.0 | 8.9 | 9.5 | 16.2 | 15.5 | 15.2 | 10.2 | 14.5 | 14.1 | 13.5 | 13.4 | 10.1 | 12.9 | 14.5 | 14.6 |
| | Evaluation | A | A | B | B | A | A | A | A | C | C | A | A | A | B | A | A | A | A | B | A | A | A |
| Heat resistance | Peel strength (N/cm) | 4.5 | 8.0 | 7.0 | 6.4 | 9.6 | 8.7 | 4.0 | 9.8 | 3.2 | 5.0 | 6.5 | 8.6 | 7.5 | 6.0 | 6.6 | 6.3 | 6.1 | 6.1 | 3.6 | 6.7 | 6.3 | 4.9 |
| | Evaluation | B | A | A | A | A | A | C | A | C | B | A | A | A | A | A | A | A | A | C | A | A | B |
| Resistance to electrolyte solutions | Peel strength (N/cm) | 5.7 | 6.4 | 6.7 | 6.8 | 9.5 | 9.0 | 7.8 | 9.6 | 5.3 | 5.4 | 7.4 | 9.5 | 8.8 | 8.3 | 9.1 | 9.2 | 8.0 | 8.3 | 6.9 | 8.9 | 8.8 | 6.1 |
| | Evaluation | C | C | B | B | A | A | B | A | C | C | B | A | A | A | A | A | A | A | B | A | A | C |
| Moldability | Limiting forming depth (mm) | 7.3 | 7.1 | 3.0 | 2.9 | 7.0 | 6.5 | 5.8 | 5.8 | 2.7 | 2.6 | 7.0 | 4.0 | 5.5 | 5.0 | 5.6 | 5.5 | 5.5 | 4.1 | 3.1 | 2.1 | 4.9 | 2.8 |
| | Evaluation | A | A | C | C | A | A | B | B | C | C | A | B | B | B | B | B | B | B | C | C | B | C |

Table 3

| | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|
| Main Agent 5 (parts by mass) | | 667 | 667 | 667 | 667 | | |
| Main Agent 18 (parts by mass) | | | | | | 667 | |
| Main Agent 19 (parts by mass) | | | | | | | 667 |
| Multifunctional polyisocyanate curing agent (B) (parts by mass) | B-1 | | 35 | 35 | 35 | 35 | 35 |
| Organoaluminum Compound (C) (parts by mass) | C1 | 0.5 | | | | 0.5 | 0.5 |
| Other organometallic compound (X) (parts by mass) | X-1 | | | 0.5 | | | |
| | X-2 | | | | 0.5 | | |
| Laminating temperature (°C) | | 80 | 80 | 80 | 80 | 80 | 80 |
| Pot life properties | Viscosity increase rate (%) | 5 | 30 | 10 | 210 | 10 | 70 |
| | Evaluation | A | A | A | C | A | B |
| Adhesion | Peel strength (N/cm) | 3.0 | 7.2 | 7.3 | 18.4 | 13.0 | 7.3 |
| | Evaluation | D | C | C | A | A | C |
| Heat resistance | Peel strength (N/cm) | 0.9 | 2.8 | 2.9 | 9.6 | 1.5 | 2.0 |
| | Evaluation | D | D | D | A | D | D |
| Resistance to electrolyte solutions | Peel strength (N/cm) | Unmeasurable | 6.4 | 6.4 | 9.5 | 0.9 | 5.0 |
| | Evaluation | Unmeasurable | C | C | A | D | C |
| Moldability | Limiting forming depth (mm) | 1.9 | 3.5 | 3.4 | 7.0 | 3.5 | 1.4 |
| | Evaluation | D | C | C | A | C | D |

Evaluation of Solution State

The solution state of Main Agents 1 to 19 was evaluated by measuring the solution viscosity (mPa·s) at 25°C using a TVB-10M Brookfield-type viscometer produced by Toki Sangyo Co., Ltd. (also referred to below as "the B-type viscometer"). The measured solution viscosity (mPa·s) at 25°C was evaluated according to the following evaluation criteria, and the results were used as the evaluation of the solution state. The evaluation results are shown in Table 1.

Evaluation Criteria

A Excellent for practical use: Less than 200 mPa·s

B Suitable for practical use: 200 mPa·s or more and less than 1000 mPa·s

C Unsuitable for practical use: 1000 mPa·s or more, or viscosity was unmeasurable due to gelation

Evaluation of Pot Life Properties

Pot life properties refer to the composition stability of an adhesive composition. Good pot life properties indicate that an increase in the viscosity of the composition is small, making long-term storage possible. When pot life properties are poor, the viscosity of the composition increases, and if the degree of the increase is large, a gelation phenomenon occurs, making long-term storage impossible and application of the composition to a substrate difficult. The pot life properties of the adhesive compositions obtained in Examples 1 to 22 and Comparative Examples 1 to 6 were evaluated based on the viscosity increase rate (%) as described below. Specifically, the solution viscosities at 25°C were measured using the B-type viscometer immediately after blending the main agent, the multifunctional polyisocyanate curing agent (B), and the organoaluminum compound (C) at the ratios shown in Tables 2 and 3, and after storing the mixture for 8 hours at an ambient temperature of 25°C under atmospheric conditions with stirring, and the viscosity increase rate was calculated according to the following formula (1). The calculated viscosity increase rate was evaluated according to the following evaluation criteria, and the results were used as the evaluation of pot life properties. The evaluation results are shown in Tables 2 and 3.

Viscosity increase rate (%) = {(solution viscosity at 25°C of the adhesive composition after stirring for 8 hours - solution viscosity at 25°C of the adhesive composition immediately after blending)/solution viscosity at 25°C of the adhesive composition immediately after blending} $\times$ 100        (Formula 1)

Evaluation Criteria

A Excellent for practical use: Less than 50%
B Suitable for practical use: 50% or more and less than 200%
C Unsuitable for practical use: 200% or more, or viscosity was unmeasurable due to gelation

Production of Laminate of Metal Substrate and Polyolefin Resin Substrate

Aluminum foil (produced by Sumikei Aluminum Foil Co., Ltd., 8079-0, thickness: 40 μm) was used as a metal substrate, and unoriented polypropylene film (Pylen (registered trademark) film CT, produced by Toyobo Co., Ltd., thickness: 40 μm) (also referred to below as a "CPP film") was used as a polyolefin resin substrate. The adhesive compositions obtained in Examples 1 to 22 and Comparative Examples 1 to 6 were individually applied to the metal substrate using a bar coater so that the film thickness of the adhesive layer after drying was 3 μm. The coated surface was dried at an ambient temperature of 100°C for 1 minute using a hot air dryer to obtain a metal substrate on which the adhesive layer with a film thickness of 3 μm was laminated. The polyolefin resin substrate was placed on the surface of the adhesive layer and bonded together using a compact desktop test laminator (SA-1010-S) produced by Tester Sangyo Co., Ltd. at a laminating temperature of 80°C or 120°C, a pressure of 0.3 MPa, and a speed of 1 m/min. The resulting product was cured at 40°C and 50% RH for 96 hours to obtain a laminate.
The laminates obtained as described above were evaluated for adhesion, 80°C heat resistance, resistance to electrolyte solutions, and moldability according to the following methods.

Evaluation of Adhesion

The laminates obtained as described above were cut into a size of 100 mm $\times$ 15 mm to prepare test pieces, and the adhesion of the test pieces was evaluated according to the following T-peel test.

T-peel Test

In accordance with the test method of ASTM-D1876-61, the peel strength (N/cm) was measured 5 times at a tensile speed of 50 mm/min in an environment of 25°C using a Tensilon RTM-100 produced by Orientec Co., Ltd. The average value was defined as the peel strength (N/cm) of the test piece. The obtained peel strength (N/cm) of the test piece was evaluated according to the following evaluation criteria, and the results were used as the evaluation of adhesion. The evaluation results are shown in Tables 2 and 3.

Evaluation Criteria

A Superior for practical use: 12.0 N/cm or more
B Excellent for practical use: 10.0 N/cm or more and less than 12.0 N/cm
C Suitable for practical use: 7.0 N/cm or more and less than 10.0 N/cm
D Unsuitable for practical use: Less than 7.0 N/cm

Evaluation of Heat Resistance

The laminates obtained as described above were cut into a size of 100 mm × 15 mm to prepare test pieces, and the heat resistance of the test pieces was evaluated by a T-peel test in a thermostatic chamber at 80°C. Specifically, AG-IS produced by Shimadzu Corporation equipped with a thermostatic chamber was used. The test piece was placed in the thermostatic chamber set to 80°C. After the temperature in the chamber was maintained at 80°C for 5 minutes, the peel strength (N/cm) at a tensile speed of 50 mm/min was measured 5 times in an environment of 80°C, and the average value was defined as the peel strength (N/cm) of the test piece. The obtained peel strength (N/cm) of the test piece was evaluated according to the following evaluation criteria, and the results were used as the evaluation of heat resistance. The evaluation results are shown in Tables 2 and 3.

Evaluation Criteria

A Superior for practical use): 6.0 N/cm or more
B Excellent for practical use: 4.5 N/cm or more and less than 6.0 N/cm
C Suitable for practical use: 3.0 N/cm or more and less than 4.5 N/cm
D Unsuitable for practical use: Less than 3.0 N/cm

Evaluation of Resistance to Electrolyte Solutions

In order to assess the suitability for use as a packaging material for LiB, resistance to electrolyte solutions (chemical resistance to electrolyte solutions) was evaluated based on the peel strength (N/cm) as described below. First, the laminates obtained as described above were cut into a size of 100 mm × 15 mm to prepare test pieces, and each of the test pieces was immersed in an electrolyte solution (obtained by adding lithium hexafluorophosphate to ethylene carbonate:diethyl carbonate:dimethyl carbonate = 1:1:1 (volume ratio)) at 85°C for 7 days. Thereafter, the test piece was removed from the electrolyte solution, washed with ion-exchanged water, wiped with a paper wiper to remove water, and thoroughly dried. Subsequently, the dried test piece was subjected to a T-peel test in the same procedure as in the T-peel test described above. The obtained peel strength (N/cm) of the test piece was evaluated according to the following evaluation criteria, and the results were used as the evaluation of resistance to electrolyte solutions. The evaluation results are shown in Tables 2 and 3.

Evaluation Criteria

A Superior for practical use: 8.0 N/cm or more
B Excellent for practical use: 6.5 N/cm or more and less than 8.0 N/cm
C Suitable for practical use: 5.0 N/cm or more and less than 6.5 N/cm
D Unsuitable for practical use: Less than 5.0 N/cm

Evaluation of Moldability

In order to assess the suitability for use as a packaging material for LiB, the moldability was evaluated using a deep drawing tester. First, the laminates obtained as described above were cut into a size of 80 mm × 120 mm to obtain test pieces, and cold forming was performed. Specifically, a bulge testing machine (Model No.: TP-25C-X2) produced by Amada Co., Ltd., which is a deep drawing tester, a forming die (female die) having an aperture of 55 mm × 35 mm, and a corresponding forming die (male die) were used to perform cold forming on 10 test pieces with the forming depth varied in 0.5 mm increments from 0.5 mm at an ambient temperature of 25°C at a blank-holding pressure of 0.4 MPa. After cold forming, the deepest forming depth at which wrinkles, pinholes in the aluminum foil, cracks, etc. did not occur in all of the 10 test pieces was defined as the limiting forming depth (mm) of the test piece. The obtained limiting forming depth (mm) of the test piece was evaluated according to the following evaluation criteria, and the results were used as the evaluation of moldability. The evaluation results are shown in Tables 2 and 3.

Evaluation Criteria

A Superior for practical use: Limiting forming depth of 6.0 mm or more
B Excellent for practical use: Limiting forming depth of 4.0 mm or more and less than 6.0 mm
C Suitable for practical use: Limiting forming depth of 2.0 mm or more and less than 4.0 mm
D Unsuitable for practical use: Limiting forming depth of less than 2.0 mm

Discussion of Results in Tables 2 and 3

The adhesive compositions obtained in Examples 1 to 22 exhibited good pot life properties. Furthermore, the laminates of a metal substrate and a polyolefin resin substrate obtained by using the adhesive compositions of Examples 1 to 22 at a laminating temperature of 80°C or 120°C, and curing the resulting products at a low temperature of 40°C for a short period of time of 96 hours, all exhibited good adhesion, heat resistance, resistance to electrolyte solutions (chemical resistance to electrolyte solutions), and moldability.

On the other hand, the adhesive composition obtained in Comparative Example 1, which did not contain the multifunctional polyisocyanate curing agent (B), exhibited extremely poor adhesion, heat resistance, and moldability. In Comparative Example 1, the resistance to electrolyte solutions could not be measured since the CPP film and the aluminum foil separated during immersion of the test piece in the electrolyte solution.

The adhesive composition obtained in Comparative Example 2, which did not contain the organoaluminum compound (C), exhibited extremely poor heat resistance.

The adhesive composition obtained in Comparative Example 3, which was obtained by using the organic zirconium compound (X-1) instead of the organoaluminum compound (C), exhibited extremely poor heat resistance.

The adhesive composition obtained in Comparative Example 4, which was obtained by using the organic tin compound (X-2) instead of the organoaluminum compound (C), exhibited extremely poor pot life properties.

The adhesive composition obtained in Comparative Example 5 exhibited extremely poor heat resistance and resistance to electrolyte solutions since Main Agent 18 was produced using A-9, which had a weight average molecular weight as large as 210000.

The adhesive composition obtained in Comparative Example 6 exhibited extremely poor heat resistance and moldability since Main Agent 19 was produced using A-10, which had a weight average molecular weight as small as 9000.

Industrial Applicability

The adhesive composition of the present embodiment exhibits good pot life properties, adhesion, heat resistance, chemical resistance to electrolyte solutions, and moldability. Therefore, the laminate of a polyolefin resin substrate and a metal substrate obtained by using the adhesive composition of the present embodiment can be widely used for, for example, packaging materials (pouch form) for a lithium battery that are used not only in fields, such as home appliance exterior panels, furniture materials, and building interior parts, but also in personal computers, mobile phones, video cameras, and the like.

**Claims**

1. An adhesive composition comprising

an acid-modified polyolefin (A),
a multifunctional polyisocyanate curing agent (B), and
an organoaluminum compound (C),
wherein the acid-modified polyolefin (A) has a weight average molecular weight (Mw) within the range of 10,000 to 200,000.

2. The adhesive composition according to claim 1, wherein the content of the multifunctional polyisocyanate curing agent (B) is 0.5 to 70 parts by mass per 100 parts by mass of the acid-modified polyolefin (A).

3. The adhesive composition according to claim 1, wherein the content of the organoaluminum compound (C) is 0.01 to 2 parts by mass per 100 parts by mass of the acid-modified polyolefin (A).

4. The adhesive composition according to claim 1, wherein the acid-modified polyolefin (A) is a graft polymer having a structure in which at least one member selected from an $\alpha,\beta$-unsaturated carboxylic acid and an acid anhydride thereof is grafted to a polyolefin.

5. The adhesive composition according to claim 1, wherein the acid-modified polyolefin (A) has an acid value of 2 to 50 mgKOH/g.

6. The adhesive composition according to claim 1, wherein the organoaluminum compound (C) is an aluminum alcoholate compound and/or an aluminum chelate compound.

7. The adhesive composition according to claim 1, wherein the adhesive composition further comprises an organic solvent (D).

8. The adhesive composition according to claim 7, wherein

the organic solvent (D) consists of a solvent (D1) and a solvent (D2),
the solvent (D1) is at least one solvent selected from the group consisting of aromatic hydrocarbon-based solvents, aliphatic hydrocarbon-based solvents, alicyclic hydrocarbon-based solvents, and halogenated hydrocarbon-based solvents, and
the solvent (D2) is at least one solvent selected from the group consisting of alcohol-based solvents, ketone-based solvents, ester-based solvents, and glycol ether-based solvents.

9. The adhesive composition according to claim 8, wherein the mass ratio of the solvent (D1) to the solvent (D2) (solvent (D1)/solvent (D2)) is 50/50 to 97/3.

10. The adhesive composition according to claim 1, wherein the adhesive composition further comprises an acid anhydride group-containing monomer (E).

11. The adhesive composition according to claim 10, wherein the content of the acid anhydride group-containing monomer (E) is 0.1 to 20 parts by mass per 100 parts by mass of the acid-modified polyolefin (A).

12. The adhesive composition according to claim 10, wherein the acid anhydride group-containing monomer (E) contains a $C_3$-$C_{20}$ hydrocarbon group.

13. The adhesive composition according to any one of claims 1 to 12 for use in bonding a polyolefin resin substrate and a metal substrate.

14. A laminate in which a polyolefin resin substrate and a metal substrate are bonded with the adhesive composition of any one of claims 1 to 12.

15. A packaging material for a lithium-ion battery, comprising the laminate of claim 14.

# EP 4 778 987 A1

<table>
<tr><td colspan="2" align="center">INTERNATIONAL SEARCH REPORT</td><td>International application No.<br><br>**PCT/JP2024/031179**</td></tr>
</table>

**A. CLASSIFICATION OF SUBJECT MATTER**

*C09J 123/26*(2006.01)i; *B32B 7/12*(2006.01)i; *B32B 27/00*(2006.01)i; *C09J 11/06*(2006.01)i; *H01M 50/105*(2021.01)i; *H01M 50/119*(2021.01)i; *H01M 50/121*(2021.01)i; *H01M 50/124*(2021.01)i; *C09J 151/06*(2006.01)n
FI:  C09J123/26; C09J11/06; B32B7/12; B32B27/00 C; H01M50/121; H01M50/119; H01M50/124; H01M50/105; C09J151/06

According to International Patent Classification (IPC) or to both national classification and IPC

**B. FIELDS SEARCHED**

Minimum documentation searched (classification system followed by classification symbols)

C09J123/26; B32B7/12; B32B27/00; C09J11/06; H01M50/105; H01M50/119; H01M50/121; H01M50/124; C09J151/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-101145 A (LINTEC CORPORATION) 08 June 2017 (2017-06-08)<br>   claim 1, paragraphs [0018]-[0020], [0022], [0033]-[0034], [0038], [0043], [0079]-[0080],<br>   examples 1-2 | 1-7 |
| Y | | 8-9 |
| A | | 10-15 |
| X | WO 2020/218363 A1 (NITTO DENKO CORPORATION) 29 October 2020 (2020-10-29)<br>   claims 1, 5-6, paragraphs [0002], [0045], [0051], [0066]-[0067], [0083], [0085], examples<br>   11, 13 | 1-7, 13-15 |
| Y | | 8-15 |
| Y | WO 2018/221037 A1 (TOYOBO CO., LTD.) 06 December 2018 (2018-12-06)<br>   claims 1, 3, paragraph [0041], tables 1-3 | 8-9, 13-15 |

☑ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **06 November 2024** | **19 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

28

## INTERNATIONAL SEARCH REPORT

| International application No. |
|---|
| **PCT/JP2024/031179** |

### C.    DOCUMENTS CONSIDERED TO BE RELEVANT

| Category* | Citation of document, with indication, where appropriate, of the relevant passages | Relevant to claim No. |
|---|---|---|
| Y | WO 2021/106849 A1 (TOYOBO CO., LTD.) 03 June 2021 (2021-06-03)<br>claim 1, paragraph [0035], table 1, examples 1-10 | 10-15 |
| A | CN 115181519 A (SELEN NEW ENERGY MAT CHANGZHOU CO., LTD.) 14 October 2022 (2022-10-14)<br>claims 1-10, examples 1-6 | 1-15 |

Form PCT/ISA/210 (second sheet) (July 2022)

## INTERNATIONAL SEARCH REPORT
### Information on patent family members

International application No.

**PCT/JP2024/031179**

| Patent document cited in search report | | | Publication date (day/month/year) | Patent family member(s) | | | Publication date (day/month/year) |
|---|---|---|---|---|---|---|---|
| JP | 2017-101145 | A | 08 June 2017 | (Family: none) | | | |
| WO | 2020/218363 | A1 | 29 October 2020 | TW | 202101814 | A | |
| WO | 2018/221037 | A1 | 06 December 2018 | CN | 110234721 | A | |
| | | | | KR 10-2020-0014260 | | A | |
| | | | | TW | 201900819 | A | |
| WO | 2021/106849 | A1 | 03 June 2021 | US | 2022/0416334 | A1 | |
| | | | | claim 1, paragraph [0049], table 1, examples 1-10 | | | |
| | | | | EP | 4067451 | A1 | |
| | | | | CN | 114761508 | A | |
| | | | | KR 10-2022-0104032 | | A | |
| | | | | TW | 202128920 | A | |
| CN | 115181519 | A | 14 October 2022 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021106849 A
- JP 2018049849 A